# EUROPEAN PATENT SPECIFICATION

(11) **EP 4 506 936 B1**
(45) Date of publication and mention of the grant of the patent: **29.07.2026**
(21) Application number: 24193143.5
(22) Date of filing: 06.08.2024
(51) Int. Cl.: G10L 15/16, G10L 15/20, G10L 15/30, G10L 15/32, G10L 25/51, G10L 25/63, G10L 25/45, G10L 15/02, G10L 15/10, G10L 15/08

(54) **DEVICE, METHOD, AND COMPUTER PROGRAM FOR PROVIDING ACOUSTIC RECOGNITION RESULT WITH IMPROVED RELIABILITY**
VORRICHTUNG, VERFAHREN UND COMPUTERPROGRAMM ZUR BEREITSTELLUNG EINES AKUSTISCHEN ERKENNUNGSERGEBNISSES MIT VERBESSERTER ZUVERLÄSSIGKEIT
DISPOSITIF, PROCÉDÉ ET PROGRAMME INFORMATIQUE POUR FOURNIR UN RÉSULTAT DE RECONNAISSANCE ACOUSTIQUE AVEC UNE FIABILITÉ AMÉLIORÉE

(30) Priority: 11.08.2023 KR 20230105562
(43) Date of publication of application: 12.02.2025
(73) Proprietor: Cochl Inc, Dover, DE 19901 (US)
(72) Inventor: PARK, Jeongsoo, Yongin-si (KR); HAN, Yoonchang, 06001 Seoul (KR); LEE, Donmoon, Seoul (KR); LEE, Subin, Seoul (KR); JEONG, Ilyoung, 05586 Seoul (KR); LIM, Hyungui, 06092 Seoul (KR)
(74) Representative: Walaski, Jan Filip

(56) References cited:
- KR-B1- 102 481 362
- US-A1- 2015 340 032
- US-A1- 2023 215 460
- LU TONG ET AL: "Context-based environmental audio event recognition for scene understanding", MULTIMEDIA SYSTEMS, ACM, NEW YORK, NY, US, vol. 21, no. 5, 9 October 2014 (2014-10-09), pages 507 - 524, XP035541402, ISSN: 0942-4962, [retrieved on 20141009], DOI: 10.1007/S00530-014-0424-7

## Description

### CROSS-REFERENCE TO RELATED APPLICATION

This application claims priority to and the benefit of Korean Patent Application No. 2023-0182158, filed on 11 August 2023.

### BACKGROUND

### 1. Field of the Invention

The present invention relates to a method of increasing a recognition rate of acoustic data, and more particularly, to a method of dividing acoustic data in time-period units to increase a recognition rate while reducing the amount of computation during a process of recognizing acoustic data of each period and provide an acoustic recognition result with improved accuracy in accordance with various surroundings.

### 2. Discussion of Related Art

People with hearing impairment who are completely deaf or not able to distinguish between sounds correctly have many difficulties in their daily lives due to the difficulty of hearing and judging situations, and they are unable to use sound information to recognize dangerous situations in indoor and outdoor environments and take immediate action. In addition to hearing impaired people, pedestrians wearing earphones, the elderly, and others with no or a limited sense of hearing may be blocked from sounds occurring around them. Further, in situations where it is difficult for a user to detect sound, such as when sleeping, the user may not be aware of his or her surroundings, which may lead to a dangerous situation or an accident.

Meanwhile, in this environment, it is necessary to develop technologies for detecting and recognizing acoustic events. Technologies for detecting and recognizing acoustic events are continuously being studied as technologies that are applicable to various fields such as real-life environmental context recognition, hazardous situation recognition, media content recognition, situation analysis in wired communication, and the like.

In the field of acoustic event recognition technology, research is mainly focused on extracting various feature values, such as Mel-frequency cepstral coefficients (MFCC), energy, spectral flux, zero crossing rates, and the like, from audio signals to verify good features, and also on Gaussianmixture-model or rule-based classification methods and the like. Lately, research has been conducted on deep-learning-based machine learning methods to improve the above methods. However, these methods has limitations in that it is difficult to ensure the accuracy of sound detection and distinguish event sound from ambient noise at low signal-to-noise ratios.

In other words, highly reliable event detection may be difficult in realworld environments including a variety of ambient noise. Specifically, detecting a valid acoustic event requires determining whether an acoustic event has occurred from acoustic data acquired in time series (i.e., continuously) and also recognizing which event class has occurred. Accordingly, it may be difficult to ensure high reliability. Also, when two or more events simultaneously occur, it is necessary to perform polyphonic recognition rather than monophonic recognition, which may further degrade an acoustic event recognition rate.

Consequently, there may be a demand for providing more reliable acoustic recognition by increasing recognition rates of acoustic data acquired in time series from real-life environments.

KR 102 481 362 B1 discloses a method, apparatus, and program for recognizing accuracy of acoustic data. US 2023/215460 A1 discloses audio event detection with window-based prediction. US 2015/340032 A1 discloses training multiple neural networks with different accuracy. LU TONG ET AL: "Context-based environmental audio recognition for scene understanding", MULTIMEDIA SYSTEMS, ACM, NEW YORK, NY, US, vol. 21, no. 5, 9 October 2014 (2014-10-09), pages 507-524, XP035541402 discloses environmental audio recognition.

### RELATED ART DOCUMENTS

### Patent Documents

Korean Patent No. 10-2014-0143069

### SUMMARY OF THE INVENTION

The present invention is directed to dividing acoustic data in time-period units to increase a recognition rate while reducing the amount of computation during a process of recognizing acoustic data of each period and provide an acoustic recognition result with improved accuracy in accordance with various surroundings.

Objects to be solved by the present invention are not limited to that described above, and other objects which have not been described will be clearly understood by those of ordinary skill in the art from the following description.

According to the present invention, there is provided a method of providing an acoustic recognition result with improved reliability according to claim 1, a device according to claim 8, and a computer-readable recording medium containing a program according to claim 9. Preferred features are set out in the dependent claims

Other details of the present invention are included in the detailed description and drawings.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a schematic diagram of a system for performing a method of providing an acoustic recognition result with improved reliability according to an exemplary embodiment of the present invention;
FIG. 2 shows a hardware block diagram of a server that performs the method of providing an acoustic recognition result with improved reliability according to an exemplary embodiment of the present invention;
FIG. 3 is a flowchart illustrating the method of providing an acoustic recognition result with improved reliability according to an exemplary embodiment of the present invention;
FIG. 4A is a set of graphs illustrating an acoustic data division process according to an exemplary embodiment of the present invention;
FIG. 4B is a set of graphs illustrating an acoustic data division process according to an exemplary embodiment of the present invention;
FIG. 5 is a flowchart illustrating a process of generating acoustic recognition result information through verification using a plurality of artificial intelligence (AI) models according to an exemplary embodiment of the present invention;
FIG. 6 is a diagram illustrating a process in which an acoustic recognition model derives an acoustic recognition result according to an exemplary embodiment of the present invention;
FIG. 7 is a diagram illustrating a process of recognizing acoustic data using a first recognition model and a second recognition model according to an exemplary embodiment of the present invention;
FIG. 8 is a flowchart illustrating a process of correcting acoustic recognition result information on the basis of correlation between acoustic sub-data according to an exemplary embodiment of the present invention;
FIG. 9A is a set of graphs illustrating a process of correcting acoustic recognition result information according to an exemplary embodiment of the present invention;
FIG. 9B is a set of graphs illustrating a process of correcting acoustic recognition result information according to an exemplary embodiment of the present invention;
FIG. 10 is a flowchart illustrating a process of generating acoustic recognition result information in consideration of surroundings and an atmosphere according to an exemplary embodiment of the present invention;
FIG. 11 is a diagram illustrating a limitation of acoustic recognition result information derived through a general recognition process according to an exemplary embodiment of the present invention; and
FIG. 12 is a graph illustrating a process of identifying an overall atmosphere from acoustic sub-data corresponding to preceding and following time points of specific acoustic sub-data and outputting acoustic recognition result information with improved accuracy in consideration of the identified atmosphere according to an exemplary embodiment of the present invention.

### DETAILED DESCRIPTION OF EXEMPLARY EMBODIMENTS

Various exemplary embodiments will be described below with reference to the drawings. Various descriptions are presented to provide understanding of the present invention. However, it will be appreciated that these embodiments may be implemented without these specific descriptions.

As used herein, the term "component," "module," "system," or the like generally refers to a computer-related entity, hardware, firmware, software, a combination of hardware and software, or execution of software. For example, a component may be, but is not limited to, a procedure running on a processor, a processor, an entity, a thread of execution, a program, and/or a computer. For example, both an application running on a computing device and the computing device may be components. One or more components may be within a processor and/or thread of execution. One component may be localized on one computer. One component may be distributed between two or more computers. Further, these components may be executed from various computer-readable media having various data structures stored thereon. The components may communicate through local and/or remote processes, for example, in accordance with a signal having one or more data packets (e.g., data from one component interacting with another component in a local system or distributed system and/or data transmitted to another system across a network such as the Internet through a signal).

Also, the term "or" is intended to mean inclusive "or" rather than exclusive "or." That is, "X uses A or B" is intended to mean one of natural implicit substitutions unless otherwise specified or contextually clear. In other words, "X uses A or B" may indicate that X uses A, X uses B, or X uses both A and B. As used herein, the term "and/or" should be understood as referring to and including all possible combinations of one or more of relevant items listed herein.

In addition, the term "comprise" and/or "comprising" should be understood as indicating the presence of a corresponding feature and/or component. However, it is to be understood that the terms "comprise" and/or "comprising" do not preclude the presence or addition of one or more other features, components, and/or groups thereof. Each singular form described herein or in the claims should be generally construed as "one or more" unless otherwise specified or contextually clear as indicating a singular form.

It will be understood by those of ordinary skill in the art that various examples of logical blocks, elements, modules, circuits, means, logic, and operations of an algorithm additionally described below in relation to embodiments set forth herein may be implemented by electronic hardware, computer software, or a combination thereof. To clearly illustrate the interchangeability of hardware and software, various examples of components, blocks, configurations, means, logic, modules, circuits, and operations have been generally described above in terms of functionality thereof. Whether such functionality is implemented by hardware or software depends on specific applications and design limitations imposed on an overall system. Functionality described in various ways for specific applications may be implemented by those skilled in the art. However, decisions of such implementation are not to be construed as departing from the present invention.

Description of embodiments set forth herein is provided to help those of ordinary skill in the art use or implement the present invention. Various modifications of the embodiments will be apparent to those of ordinary skill in the art. General principles defined herein may apply to other embodiments without departing from the scope of the present invention. Therefore, the present invention is not limited to embodiments set forth herein. The present invention should be interpreted within a broadest range consistent with principles and novel features described herein.

As used herein, the term "computer" indicates any type of hardware device including at least one processor and may be understood as including a software element running on a corresponding hardware device according to an embodiment. For example, a computer may be understood as including, but is not limited to, a smartphone, a tablet personal computer (PC), a desktop computer, a laptop computer, and a user client and an application running on each device.

Hereinafter, exemplary embodiments of the present invention will be described in detail with reference to the accompanying drawings.

Operations described herein will be described as being performed by a computer, but a subject of each operation is not limited thereto, and at least some operations may be performed by different devices according to an embodiment.

A method of providing an acoustic recognition result with improved reliability according to various embodiments of the present invention may include a method of additionally verifying recognized acoustic data to increase a recognition rate of acoustic data, a method of correcting at least some of acoustic recognition results on the basis of acoustic recognition results output in a certain time, or a method of identifying surroundings and an atmosphere in real time and deriving an acoustic recognition result by considering the surroundings and atmosphere with acoustic data. According to an exemplary embodiment, an improvement in the recognition accuracy of acoustic data may represent that recognition accuracy in detecting a specific event from acoustic data is improved.

The method of additionally verifying recognized acoustic data may be, for example, a method of deriving an additional acoustic recognition result a plurality of times using a plurality of neural network models (e.g., acoustic recognition models) and verifying the additional acoustic recognition results to improve the reliability of a finally derived acoustic recognition result. In this case, the plurality of neural network models may have different output processes. For example, in the neural network models, acoustic data having different lengths may be utilized as inputs. One model may derive an acoustic recognition result on the basis of acoustic data corresponding to 1-second periods, and another model may derive an acoustic recognition result on the basis of acoustic data corresponding to 5-second periods. However, the plurality of neural network models are not limited thereto and may be acoustic recognition models with different performance. As a specific example, generally, a first recognition model which has relatively low performance and is lightweight may be utilized first to perform acoustic recognition and output an acoustic recognition result. When it is determined that the acoustic recognition result which is first output is relatively unreliable, acoustic recognition is performed again through a second recognition model having higher performance than the first recognition model such that the first acoustic recognition result is verified. In this configuration, the first recognition model is normally used, and the second recognition model is only utilized for verification when necessary. With this configuration, it is advantageously possible to effectively reduce the amount of computation and also improve the reliability of a recognition result.

Also, the method of correcting at least some of acoustic recognition results on the basis of acoustic recognition results output in a certain time may represent, for example, postprocessing correction of an acoustic recognition result corresponding to acoustic data. Acoustic data may be divided at certain time intervals and input, and according to the present invention, acoustic recognition result corresponding to each piece of divided acoustic data is output. In this case, correlation between acoustic recognition results that are output in a certain time may be identified to correct a specific acoustic recognition result using another acoustic recognition result. As a specific example, when an acoustic recognition result of sound B (e.g., applause) is output within n seconds after an acoustic recognition result of sound A (e.g., a gunshot) is output, the recognition result of sound A may be corrected into sound C (e.g., a firecracker). In other words, at least one of acoustic recognition results which are output (or recognized) in a certain time is corrected in consideration of correlation between the acoustic recognition results such that recognition accuracy can be improved.

Further, according to the present invention, surroundings and an atmosphere may be identified in real time and taken into consideration with acoustic data to derive an acoustic recognition result, which can improve the recognition accuracy of the acoustic data. A separate neural network model (e.g., a mood identification model) that identifies surroundings and mood at a time point when acoustic data is acquired may be utilized to recognize situations before and after the input of the acoustic data, and the situations may be taken into consideration with the acoustic data in an acoustic analysis process to improve reliability of an output acoustic recognition result. As a specific example, sound A (e.g., a firecracker) may be recognized as a gunshot by a general acoustic recognition model. In the case of a short explosive sound, it is difficult to output an acoustic recognition result with high accuracy. According to the present invention, an atmosphere corresponding to a situation when acoustic data is acquired may be identified on the basis of acoustic recognition results acquired before and after a corresponding sound is detected, and taken into consideration with the acoustic data to derive an acoustic recognition result. For example, by identifying the detection of singing, applause, and cheering before and after the recognition of sound A, it is determined that the mood associated with sound A is celebratory (or a party, that is, cheerful or happy), and the explosion is recognized as a "firecracker" rather than a "gunshot." In other words, the output accuracy of sound recognition results can be improved by identifying the overall atmosphere on the basis of acoustic recognition results output before and after the acoustic data to be recognized and recognizing the acoustic data in consideration of the identified atmosphere. A method of improving the recognition accuracy of acoustic data will be described in further detail below.

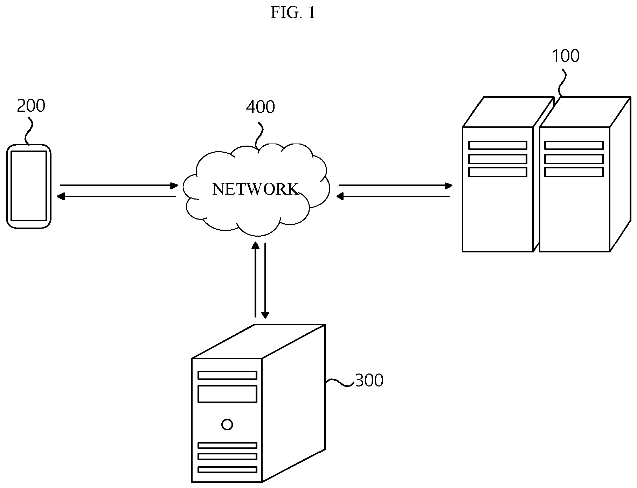

FIG. 1 is a schematic diagram of a system for performing a method of providing an acoustic recognition result with improved reliability according to an exemplary embodiment of the present invention. As shown in FIG. 1, the system for performing a method of providing an acoustic recognition result with improved reliability according to an exemplary embodiment of the present invention may include a server 100 for improving the recognition accuracy of acoustic data, a user terminal 200, and an external server 300. Here, the system for performing a method of providing an acoustic recognition result with improved reliability shown in FIG. 1 is in accordance with an exemplary embodiment, and components thereof are not limited to the embodiment shown in FIG. 1 and may be added, changed, or removed as necessary.

According to an exemplary embodiment, the server 100 for improving the recognition accuracy of acoustic data may determine whether a specific event occurs on the basis of acoustic data. Specifically, the server 100 for improving the recognition accuracy of acoustic data may acquire acoustic data related to real life and analyze the acquired acoustic data to determine whether the specific event occurs. According to an exemplary embodiment, the specific event may be related to security, safety, or occurrence of danger, for example, an alarm, a child crying, glass breaking, a tire blowout, and the like. The above details of a sound related to the specific event are illustrative, and the present invention is not limited thereto.

According to an exemplary embodiment, the server 100 for improving the recognition accuracy of acoustic data may be any server implemented by an application programming interface (API). For example, the user terminal 200 may acquire acoustic data and transmit the acoustic data to the server 100 through a cloud API. For example, the server 100 may acquire the acoustic data from the user terminal 200 and analyze the acoustic data to determine that there is an emergency alarm sound (e.g., a siren sound). According to an exemplary embodiment, the server 100 for improving the recognition accuracy of acoustic data may analyze acoustic data through an acoustic recognition model (e.g., artificial intelligence (AI) model).

According to an exemplary embodiment, the acoustic recognition model (e.g., AI model) may include one or more network functions, and the one or more network functions may be configured as a set of interconnected computational units that may be generally referred to as "nodes." These "nodes" may also be referred to as "neurons." The one or more network functions include one or more nodes. The nodes (or neurons) constituting the one or more network functions may be connected to each other via one or more "links."

In the AI model, the one or more nodes connected via the links may be an input node and an output node in relation to each other. The concepts of input node and output node are relative. Any node that is an output node with respect to one node may be an input node with respect to another node, and vice versa. As described above, the relationship between an input node and an output node may be established on the basis of a link. One or more output nodes may be connected to one input node via links, and vice versa.

In the relationship between an input node and an output node connected via one link, a value of the output node may be determined on the basis of data input to the input node. Here, the link interconnecting the input node and the output node may have a weight. The weight may be variable and may be changed by a user or algorithm such that the AI model may perform a desired function. For example, when one or more input nodes are connected to one output node via separate links, the output node may determine an output node value on the basis of values input to the input nodes connected to the output node and weights set for the links each corresponding to the input nodes.

As described above, in the AI model, one or more nodes are interconnected via one or more links to have the relationship of an input node and an output node. Characteristics of the AI model may be determined in accordance with the number of nodes and links in the AI model, connections between the nodes and the links, and weight values assigned to the links. For example, when two AI models have the same number of nodes and links and different weights for the links, the two AI models may be recognized as different from each other.

Some nodes included the AI model may constitute one layer on the basis of their distances from an initial input node. For example, a set of nodes having a distance of n from the initial input node may constitute an n^{th} layer. The distance from the initial input node may be defined by the minimum number of links required to reach the corresponding node from the initial input node. However, the definition of a layer is arbitrary for description, and the order of a layer in the AI model may be defined according to a method different from that described above. For example, a layer of nodes may be defined by the distance from a final output node.

The initial input node may be one or more nodes to which data is directly input without passing through links in the relationships with other nodes among the nodes in the AI model. Alternatively, in the relationship between nodes based on a link in the network of the AI model, the initial input node may be a node which does not have other input nodes connected via links. Similarly, the final output node may be one or more nodes which do not have output nodes in the relationship with other nodes among the nodes in the AI model. Also, a hidden node may be a node constituting the AI model other than the initial input node and the final output node. In the AI model according to an exemplary embodiment of the present invention, the number of nodes of an input layer may be larger than the number of nodes of a hidden layer close to an output layer, and the number of nodes may decrease from the input layer to the hidden layer.

The AI model may include one or more hidden layers. Hidden nodes of the hidden layers may use an output of a previous layer and outputs of nearby hidden nodes as inputs. The number of hidden nodes of each hidden layer may be uniform or variable. The number of nodes of the input layer may be determined on the basis of the number of data fields of input data and may be equal to or different from the number of hidden nodes. The input data input to the input layer may be computed by the hidden nodes of the hidden layers and output by a fully connected layer (FCL) which is the output layer.

In various embodiments, the AI model may perform supervised learning using a plurality of pieces of acoustic data and feature information corresponding to each piece of acoustic data as training data. However, the present invention is not limited thereto, and various learning methods may be applied.

In general, supervised learning may be understood as a method of generating training data by labeling specific data and information related to the specific data and performing training using the training data, that is, a method of generating training data by labeling two pieces of data that are in a causal relationship with each other and performing training using the generated training data.

In an embodiment, the server 100 for improving the recognition accuracy of acoustic data may determine whether to stop training using verification data when training of the one or more network functions is performed for predetermined epochs or more. The predetermined epochs may be some of total training goal epochs.

The verification data may be at least some of the labeled training data. In other words, the server for improving the recognition accuracy of acoustic data may train the AI model using the training data and determine whether an effect of training the AI model reaches a predetermined level or more using the verification data after the training of the AI model is iterated for the predetermined epochs or more. For example, when training is performed using 100 pieces of training data and a target number of iterations of training is 10, the server 100 for improving the recognition accuracy of acoustic data may perform 10 iterations of training which are the predetermined epochs and then perform three iterations of training using ten pieces of verification data. When a change of outputs of the AI model during the three iterations of training is a predetermined level or less, the server 100 for improving the recognition accuracy of acoustic data may determine that further training is meaningless and end the training.

In other words, the verification data may be used for determining whether to complete training on the basis of whether an effect of epochspecific training is the predetermined level or more in iterative training of the AI model. The training data, the number of pieces of verification data, and the number of iterations described above are illustrative, and the present invention is not limited thereto.

The server 100 for improving the recognition accuracy of acoustic data may generate an AI model by testing performance of one or more network functions using test data and determining whether to activate the one or more network functions. The test data may be utilized to verify performance of the AI model and may be at least some of the training data. For example, 70% of the training data may be utilized to train the AI model (i.e., training for adjusting a weight to output a result similar to a label), and 30% may be used as test data for verifying the performance of the AI model. The server 100 for improving the recognition accuracy of acoustic data may input the test data to the AI model of which training has been completed and measure errors to determine whether to activate the AI model in accordance with whether the performance of the AI model is predetermined performance or above.

The server for improving the recognition accuracy of acoustic data may verify the performance of the AI model of which training has been completed using the test data and activate the AI model to be used in other applications when the performance of the AI model of which training has been completed is a predetermined reference or above.

In addition, when the performance of the AI model of which training has been completed is below the predetermined reference, the server 100 for improving the recognition accuracy of acoustic data may deactivate and discard the AI model. For example, the server 100 for improving the recognition accuracy of acoustic data may determine performance of a generated AI model on the basis of factors such as accuracy, precision, recall, and the like. The foregoing performance evaluation criteria are illustrative, and the present invention is not limited thereto. The server 100 for improving the recognition accuracy of acoustic data may generate a plurality of AI models by independently training AI models, evaluate performance thereof, and utilize only an AI model of which performance is a certain level or higher. However, the present invention is not limited thereto.

Throughout this specification, "computation model," "neural network," and "network function" may be interchangeably used (hereinafter, collectively referred to as "neural network"). A data structure may be understood as including a neural network. A data structure including a neural network may be stored in a computer-readable medium. The data structure including the neural network may also include data input to the neural network, weights of the neural network, hyperparameters of the neural network, data acquired from the neural network, an activation function associated with each node or layer of the neural network, and a loss function for training the neural network. The data structure including the neural network may include some of the foregoing elements. In other words, the data structure including the neural network may include all or any combination of the data input to the neural network, the weights of the neural network, the hyperparameters of the neural network, the data acquired from the neural network, the activation function associated with each node or layer of the neural network, the loss function for training the neural network, and the like. In addition to the foregoing elements, the data structure including the neural network may include any other information for determining characteristics of the neural network. Also, the data structure may include various types of data used or generated in a computing process of the neural network and is not limited to the above description. The computer-readable medium may include a computer-readable recording medium and/or a computer-readable transmission medium. The neural network may include a set of interconnected computing units that may be generally referred to as "nodes." These "nodes" may also be referred to as "neurons." The neural network includes at least one node.

According to an exemplary embodiment of the present invention, the server 100 for improving the recognition accuracy of acoustic data may be a server for providing a cloud computing service. More specifically, the server for improving the recognition accuracy of acoustic data may be a server that provides a cloud computing service which is a type of Internet-based computing for processing information using a computer connected via the Internet other than a user's computer. The cloud computing service may be a service for storing data on the Internet and allowing a user to use necessary data or a necessary program anytime and anywhere by connecting to the Internet without storing the necessary data or program in the user's computer, and the data stored on the Internet may be easily shared and transmitted through simple manipulation and clicking. In addition, the cloud computing service may be a service for allowing a desired task to be performed using functions of an application program provided on a web without installing a program and allowing several people to perform a task at the same time while sharing a document, as well as simply storing data in a server on the Internet. The cloud computing service may be implemented as at least one of infrastructure as a service (IaaS), platform as a service (PaaS), software as a service (SaaS), a virtual machine-based cloud server, and a container-based cloud server. In other words, the server 100 for improving the recognition accuracy of acoustic data may be implemented in the form of at least one of the foregoing cloud computing services. The specific cloud computing services are illustrative, and the present invention may include any platform for constructing a cloud computing environment.

In various embodiments, the server 100 for improving the recognition accuracy of acoustic data may be connected to the user terminal 200 via a network, generate and provide an acoustic recognition model that analyzes acoustic data, and also provide information (e.g., acoustic recognition result information) obtained by analyzing acoustic data through the acoustic recognition model to the user terminal 200.

Here, the network may be a connective structure for exchanging information between nodes such as a plurality of terminals and servers. Examples of the network include a local area network (LAN), a wide area network (WAN), the world wide web (WWW), a wired or wireless data communication network, a telephone network, a wired or wireless television communication network, and the like.

The wireless data communication network may be, but is not limited to, Third Generation (3G), Fourth Generation (4G), Fifth Generation (5G), Third Generation Partnership Project (3GPP), Fifth Generation Partnership Project (5GPP), Long Term Evolution (LTE), World Interoperability for Microwave Access (WiMAX), Wi-Fi, the Internet, a LAN, a wireless LAN, a WAN, a personal area network (PAN), a radio frequency (RF) network, a Bluetooth network, a near-field communication (NFC) network, a satellite broadcast network, an analog broadcast network, a digital multimedia broadcasting (DMB) network, and the like.

In an exemplary embodiment, the user terminal 200 may be connected to the server 100 for improving the recognition accuracy of acoustic data via the network, provide acoustic data to the server 100 for improving the recognition accuracy of acoustic data, and receive acoustic recognition result information (e.g., occurrence of a gunshot, an alarm, a child crying, glass breaking, a tire blowout, or the like) about occurrence of various events in response to the provided acoustic data.

Here, the user terminal 200 is a wireless communication device with portability and mobility and may be, but is not limited to, any type of handheld-based wireless communication device such as a navigation device, a Personal Communication System (PCS) device, a Global System for Mobile Communications (GSM) device, a Personal Digital Cellular (PDC) device, a Personal Handyphone System (PHS) device, a personal digital assistant (PDA) device, an International Mobile Telecommunication (IMT)-2000 device, a Code Division Multiple Access (CDMA)-2000 device, a Wideband CDMA (WCDMA) device, a Wireless Broadband Internet (WiBro) terminal, a smartphone, a smart pad, a tablet personal computer (PC), or the like. For example, the user terminal 200 may be provided in a specific area to perform detection related to the specific area. For example, the user terminal 200 may be provided in a vehicle to acquire acoustic data generated while the vehicle is parked or traveling. As another example, the user terminal 200 may be provided to detect an emergency situation in an area where children are present (e.g., a playground or a space in a facility). The foregoing locations or places where the user terminal 200 is provided are illustrative, and the present invention is not limited thereto.

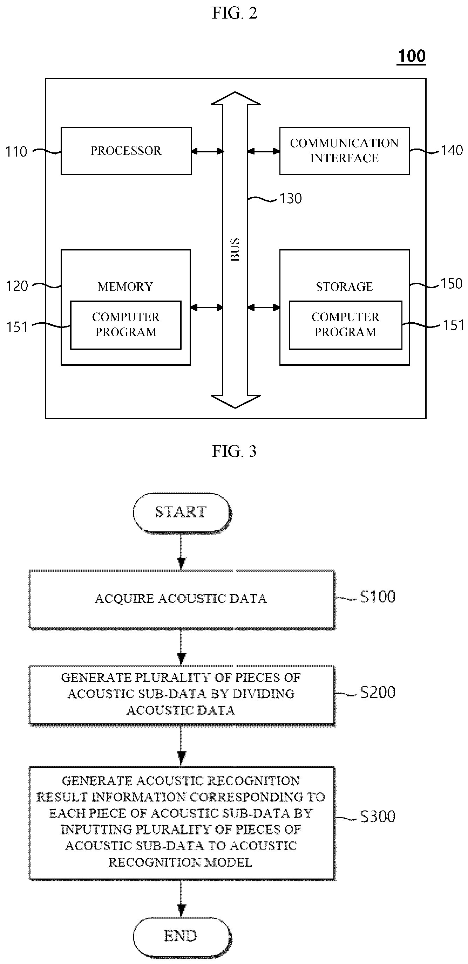

In an exemplary embodiment, the external server 300 may be connected to the server 100 for improving the recognition accuracy of acoustic data via the network, and the server 100 for improving the recognition accuracy of acoustic data may provide various kinds of information or data required for analyzing acoustic data using the AI model or receive, store, and manage result data that is derived by analyzing acoustic data using the AI model. For example, the external server 300 may be, but is not limited to, a storage server that is separately provided outside the server 100 for improving the recognition accuracy of acoustic data. A hardware configuration of the server 100 for improving the recognition accuracy of acoustic data will be described below with reference to FIG. 2.

FIG. 2 shows a hardware block diagram of a server for improving the recognition accuracy of acoustic data according to an exemplary embodiment of the present invention.

Referring to FIG. 2, the server 100 for improving the recognition accuracy of acoustic data according to an exemplary embodiment of the present invention (hereinafter, the "server 100") may include at least one processor 110, a memory 120 on which a computer program 151 executed by the at least one processor 110 is loaded, a bus 130, a communication interface 140, and a storage 150 that stores the computer program 151. Here, FIG. 2 only shows components related to an embodiment of the present invention. Therefore, it is apparent to those of ordinary skill in the art that other general-purpose components may be further included in addition to the components shown in FIG. 2.

The processor 110 controls overall operations of the components of the server 100. The processor 110 may include a central processing unit (CPU), a microprocessor unit (MPU), a microcontroller unit (MCU), a graphics processing unit (GPU), or any type of processor well known in the technical field of the present invention.

The processor 110 may read the computer program 151 stored in the memory 120 to process data for an AI model in accordance with an exemplary embodiment of the present invention. According to an exemplary embodiment of the present invention, the processor 110 may perform computation for training a neural network. The processor 110 may perform computation for training a neural network such as processing input data for training through deep learning (DL), extracting features from the input data, calculating an error, updating weights of the neural network using backpropagation, and the like.

At least one of a CPU, a general-purpose computing on GPU (GPGPU), and a tensor processing unit (TPU) of the processor 110 may process learning of a network function. For example, the CPU and the GPGPU may process, in conjunction with each other, the learning of the network function and data classification using the network function. Also, in an exemplary embodiment of the present invention, processors of a plurality of computing devices may be used together to perform the learning of the network function and data classification using the network function. A computer program executed in a computing device according to an exemplary embodiment of the present invention may be a program executable by the CPU, the GPGPU, or the TPU.

In this specification, "network function" may be used interchangeably with "artificial neural network" and "neural network." In this specification, a network function may include at least one neural network, and in this case, an output of the network function may be an ensemble with an output of the at least one neural network.

The processor 110 may read the computer program 151 stored in the memory 120 to provide an acoustic recognition model in accordance with an exemplary embodiment of the present invention. According to an exemplary embodiment of the present invention, the processor 110 may perform computation to train the acoustic recognition model.

According to an exemplary embodiment of the present invention, the processor 110 may generally process overall operations of the server 100. The processor 110 may process signals, data, information, and the like that are input or output through the components described above or may execute an application program stored in the memory 120 to provide appropriate information or functions to a user or the user terminal 200 or process the information or functions.

The processor 110 may perform computation on at least one application or program for performing methods according to exemplary embodiments of the present invention, and the server 100 may include one or more processors.

In various exemplary embodiments, the processor 110 may further include a random access memory (RAM) (not shown) and a read-only memory (ROM) (not shown) for temporarily and/or permanently storing signals (or data) processed in the processor 110. The processor 110 may be implemented in the form of a system on chip (SoC) including at least one of a graphics processor, a RAM, and a ROM.

The memory 120 stores various kinds of data, instructions, and/or information. The memory 120 may load the computer program 151 from the storage 150 to perform methods or operations in accordance with various embodiments of the present invention. When the computer program 151 is loaded to the memory 120, the processor 110 may execute one or more instructions constituting the computer program 151 to perform the methods or operations. The memory 120 may be embodied as a volatile memory, such as a RAM, but the technical scope of the present invention is not limited thereto.

The bus 130 provides a communication function between the components of the server 100. The bus 130 may be implemented as various kinds of buses such as an address bus, a data bus, a control bus, and the like.

The communication interface 140 supports wired and wireless Internet communication of the server 100. The communication interface 140 may support various communication methods other than Internet communication. To this end, the communication interface 140 may include a communication module well known in the technical field of the present invention. In some embodiments, the communication interface 140 may be omitted.

The storage 150 may store the computer program 151 nontemporarily. When a process of improving the recognition accuracy of acoustic data is performed through the server 100, the storage 150 may store various kinds of information that are necessary to provide the process of improving the recognition accuracy of acoustic data.

The storage 150 may include a non-volatile memory, such as a ROM, an erasable programmable ROM (EPROM), an electrically erasable programmable ROM (EEPROM), a flash memory, or the like, a hard disk drive, a detachable disk, or any type of computer-readable recording medium well known in the technical field to which the present invention pertains.

The computer program 151 may include one or more instructions causing the processor 110 to perform methods or operations in accordance with various embodiments of the present invention when the computer program 151 is loaded to the memory 120. In other words, the processor 110 may execute the one or more instructions to perform the methods or operations in accordance with various embodiments of the present invention.

In an exemplary embodiment, the computer program 151 may include one or more instructions for performing a method of providing an acoustic recognition result with improved accuracy, the method including an operation of acquiring acoustic data, an operation of generating a plurality of pieces of acoustic sub-data by dividing the acoustic data, and an operation of generating acoustic recognition result information corresponding to each piece of acoustic sub-data by inputting the plurality of pieces of acoustic sub-data to an acoustic recognition model.

The operations of the method or algorithm described above in connection with embodiments of the present invention may be implemented directly by hardware, a software module executed by hardware, or a combination thereof. The software module may be stored in a RAM, a ROM, an EPROM, an EEPROM, a flash memory, a hard disk, a detachable disk, a compact disc (CD)-ROM, or any type of computer-readable recording medium well known in the technical field to which the present invention pertains.

Components of the present invention may be embodied in the form of a program (or application) and stored in a medium to be executed in combination with a computer which is hardware. The components of the present invention may be implemented by software programming or software elements, and similarly, embodiments may be implemented in a programming or scripting language, such as C, C++, Java, an assembler, or the like, to include various algorithms implemented as a combination of data structures, processes, routines, or other programming components. Functional aspects may be embodied as an algorithm executable by one or more processors. The method of providing an acoustic recognition result with improved accuracy performed by the server 100 will be described below with reference to FIGS. 3 to 12.

FIG. 3 is a flowchart illustrating the method of providing an acoustic recognition result with improved reliability according to an exemplary embodiment of the present invention. Operations illustrated in FIG. 3 may be reordered as necessary, and one or more operations may be omitted or added. In other words, the following operations correspond to an exemplary embodiment of the present invention, and the scope of the present invention is not limited thereto.

According to an exemplary embodiment of the present invention, the method of providing an acoustic recognition result with improved reliability may include an operation S100 of acquiring acoustic data. The server 100 may acquire acoustic data 10. The acoustic data 10 may include information related to sound acquired from real life. Acquiring acoustic data in accordance with an exemplary embodiment of the present invention may involve receiving or loading the acoustic data 10 stored in the memory 120. Also, acquiring acoustic data may involve receiving or loading data from another storage medium, another computing device, or a processing module in the same computing device on the basis of a wired or wireless communication device.

According to an exemplary embodiment, the acoustic data 10 may be acquired through the user terminal 200 related to the user. For example, the user terminal 200 related to the user may be any type of handheld-based wireless communication device such as a smartphone, a smart pad, a tablet PC, or the like, or an electronic device (e.g., a device for receiving acoustic data through a microphone) or the like provided in a specific space (e.g., a residence of the user).

According to an exemplary embodiment, the method of providing an acoustic recognition result with improved reliability may include an operation S200 of generating a plurality of pieces of acoustic sub-data by dividing the acoustic data.

In an exemplary embodiment, the operation of generating a plurality of pieces of acoustic sub-data may include an operation of generating a plurality of pieces of acoustic sub-data by dividing the acoustic data in preset size units.

The server 100 may generate a plurality of pieces of acoustic sub-data by dividing the acoustic data 10 in certain time units. The plurality of pieces of acoustic sub-data may be acquired by dividing the acoustic data which is time-series information into a plurality of frames on the basis of specific time units. Specifically, the server 100 may generate a plurality of pieces of acoustic sub-data by dividing acoustic data in predetermined first time units. Since sound (or audio) is time-series data that is continuously generated, it is necessary to divide the sound in units of a certain time period and recognize the sound in each period.

For example, when first acoustic data is acoustic data acquired for a time of one minute, the server 100 may set the first time unit to one second and divide the first acoustic data to generate 60 pieces of acoustic sub-data (or acoustic subframes). The foregoing specific values related to the first time units and the one or more pieces of acoustic sub-data are illustrative, and the present invention is not limited thereto. According to an exemplary embodiment, when the acoustic data is divided in smaller time units during the process of dividing the acoustic data into a plurality of pieces of acoustic sub-data, the amount of computation of a neural network (i.e., an acoustic recognition model) is reduced, which leads to performance improvement. When the amount of computation is remarkably reduced with a reduction in the length of acoustic sub-data corresponding to an input, the acoustic recognition model may be utilized as a short-period recognition model and thus can be utilized as an edge software development kit (SDK). In other words, when acoustic data is divided in a plurality of short period units, the acoustic recognition model may be run through one application program executable by the server 100.

According to an exemplary embodiment, in the case of a specific sound, an acoustic recognition model for performing short-period recognition may have difficulty deriving acoustic recognition result information with improved reliability. For example, in the case of a sound with a short duration, it is difficult to accurately recognize the sound by referring to only a specific period.

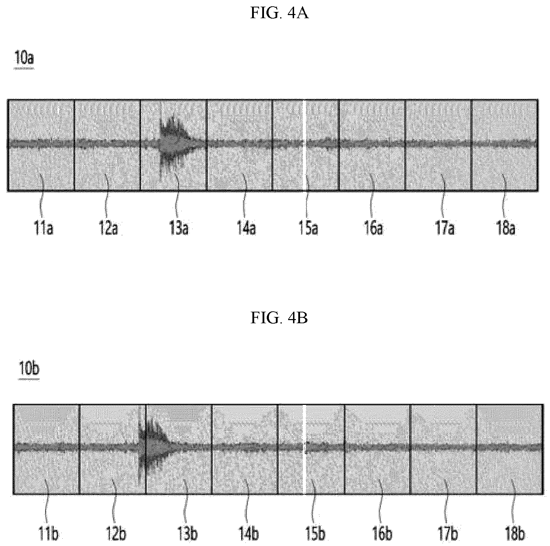

As a specific example, referring to FIG. 4A, first acoustic data 10a related to a gunshot sound which has a short duration may be divided in 1-second units, that is, first acoustic sub-data 11a to eighth acoustic sub-data 18a. In this case, the gunshot sound in the third acoustic sub-data 13a is included entirely in a period corresponding to the third acoustic sub-data 13a. Accordingly, considering only one period (i.e., the third acoustic sub-data 13a) may result in accurate recognition.

Meanwhile, referring to FIG. 4B, second acoustic data 10b related to a gunshot sound which has a short duration may be likewise divided into 1-second units, that is, first acoustic sub-data 11b to eighth acoustic sub-data 18b. In this case, the gunshot sound may last over the second acoustic sub-data 12b and the third acoustic sub-data 13b as shown in FIG. 4B. Since acoustic data is acquired in time series and divided into certain-size pieces, the explosive sound and echo of the gunshot may be present in different periods. In this case, when an acoustic recognition model recognizes each of the second acoustic sub-data 12b and the third acoustic sub-data 13b, accurate recognition may not be possible because neither of the second acoustic sub-data 12b and the third acoustic sub-data 13b includes the entire gunshot sound. Accordingly, the accuracy of an output (i.e., recognition accuracy) may be degraded.

In other words, when a sound with a short duration is divided into different periods, the accuracy of acoustic recognition may be degraded. To solve this problem, time units for dividing the sound may be lengthened (e.g., two seconds), but this increases the amount of computation of an acoustic recognition model. Accordingly, this cannot be used in low-cost devices and is inefficient.

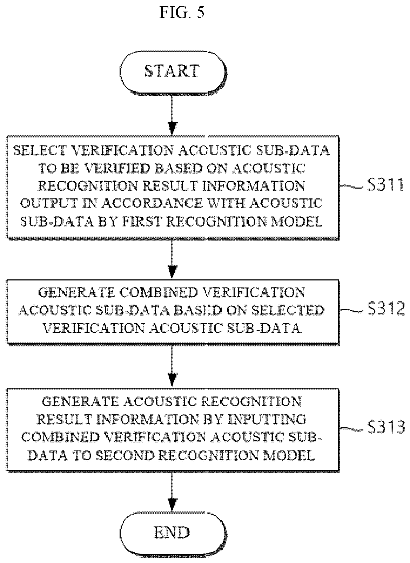

Therefore, the server 100 of the present invention may additionally have a neural network model to perform acoustic recognition again when recognition accuracy is low. In other words, a plurality of neural network models may be utilized to derive additional acoustic recognition results a plurality of times for verification, which may improve the reliability of a final acoustic recognition result. In particular, a plurality of neural network models are not simply utilized a plurality of times, but additional verification is performed in a specific situation where recognition accuracy is estimated to be low. In this way, it is possible to improve the reliability of a recognition result while effectively reducing the amount of computation. A configuration for improving recognition accuracy by performing verification using a plurality of neural network models will be described in detail below with reference to FIG. 5.

FIG. 5 is a flowchart illustrating a process of generating acoustic recognition result information through verification using a plurality of AI models according to an exemplary embodiment of the present invention. Operations illustrated in FIG. 5 may be reordered as necessary, and one or more operations may be omitted or added. In other words, the following operations correspond to an exemplary embodiment of the present invention, and the scope of the present invention is not limited thereto.

According to an exemplary embodiment of the present invention, the method of generating acoustic recognition result information may include an operation S311 in which a first recognition model 210 selects verification acoustic sub-data, which is acoustic sub-data to be verified, on the basis of acoustic recognition result information output for each piece of acoustic sub-data.

According to an exemplary embodiment, an acoustic recognition model of the present invention may include the first recognition model 210 that receives a plurality of pieces of acoustic sub-data as inputs and provides a plurality of outputs each corresponding to the plurality of pieces of acoustic sub-data.

According to an exemplary embodiment, the server 100 may train an autoencoder using unsupervised learning. Specifically, the server 100 may train a dimensionality reduction network function (e.g., an encoder) and a dimensionality recovery network function (e.g., a decoder) constituting the autoencoder such that similar output data to input data may be output. More specifically, only key feature data (or a feature) of acoustic data input through the dimensionality reduction network function during an encoding process may be learned through a hidden layer, and other information may be lost. In this case, during a decoding process of the dimensionality recovery network function, output data of a hidden layer may be an approximation of the input data (i.e., the acoustic data) rather than a perfect copy value. In other words, the server 100 may train the autoencoder by adjusting weights such that the output data is as close as possible to the input data.

The autoencoder may be a neural network for outputting similar output data to input data. The autoencoder may include at least one hidden layer, and an odd number of hidden layers may be disposed between an input layer and an output layer. The number of nodes of each layer may be reduced from that of the input layer to that of an intermediate layer, which is referred to as a bottleneck layer (encoding), and increased from that of the bottleneck layer to that of the output layer (symmetric to the input layer) symmetrically with the reduction. The number of nodes of the input layer and the number of nodes of the output layer may correspond to the number of items of input data remaining after the input data is preprocessed. In the autoencoder structure, the number of nodes of a hidden layer included in the encoder may decrease with an increase in the distance between the hidden layer and the input layer. When the number of nodes of the bottleneck layer (the layer having the smallest number of nodes and positioned between the encoder and the decoder) is extremely small, a sufficient amount of information may not be transmitted, and thus the number of nodes of the bottleneck layer may be maintained greater than or equal to a certain number (e.g., half of or more than the half the number of nodes of the input layer).

The server 100 may input a training dataset including a plurality of pieces of training data tagged with object information to the trained dimensionality reduction network, match output object-specific feature data to the tagged object information, and store the matched object-specific feature data. Specifically, the server 100 may input a first training data subset tagged with first sound identification information (e.g., a sound of breaking glass) to the dimensionality reduction network function and acquire feature data of a first object regarding training data included in the first training data subset. The acquired feature data may be represented as vectors. In this case, pieces of feature data each output in accordance with the plurality of pieces of training data included in the first training data subset are outputs based on training data related to the first sound and thus may be positioned relatively close together in a vector space. The server 100 may match the first sound identification information (i.e., the sound of breaking glass) to the feature data related to the first sound represented as the vectors and store the matched feature data.

The trained dimensionality reduction network function of the autoencoder may be trained to extract features that cause the dimensionality recovery network function to recover input data well.

Also, a plurality of pieces of training data included in each of a first training data subset tagged with second sound identification information (e.g., a siren sound) may be converted into feature data (i.e., features) through the dimensionality reduction network function and displayed in a vector space. In this case, the feature data is outputs based on training data related to the second sound (i.e., the siren sound) and thus may be positioned relatively close together in the vector space. In this case, the feature data corresponding to the second sound identification information may be displayed in a different vector space than the feature data corresponding to the first sound identification information (i.e., the sound of breaking glass).

In an exemplary embodiment, the server 100 may configure the acoustic recognition model with the trained autoencoder including the dimensionality reduction network function. In other words, when acoustic sub-data is input to the acoustic recognition model including the dimensionality reduction network function generated through the above training process, the acoustic recognition model may extract feature information (i.e., features) corresponding to the acoustic sub-data by computing the acoustic sub-data using the dimensionality reduction network function.

In this case, the acoustic recognition model may compare distances between a region in which a feature corresponding to acoustic sub-data is displayed and object-specific feature data in a vector space to evaluate acoustic style similarity and output acoustic recognition result information corresponding to the acoustic sub-data on the basis of the similarity evaluation. According to an exemplary embodiment, the acoustic recognition result information may include a plurality of recognition items and probability values each corresponding to the plurality of recognition items.

Specifically, the acoustic recognition model (or the first recognition model 210) may compute acoustic sub-data using the dimensionality reduction network function to output feature information (i.e., features). In this case, the acoustic recognition model may output a plurality of recognition items corresponding to the acoustic sub-data and possibility values corresponding to the recognition items on the basis of the feature information output in accordance with the acoustic sub-data and feature data of sound identification information recorded in the vector space in advance through training.

The plurality of recognition items are intended to identify which item a sound is related to. For example, the plurality of recognition items may include, but are not limited to, a gunshot, a firecracker, a scream, a tire blowout, a siren, a barking dog, rain, and the like. The plurality of recognition items may be generated on the basis of sound identification information which is close to the feature information output in accordance with the acoustic sub-data in the vector space. For example, the acoustic recognition model may configure a plurality of recognition items using sound identification information that matches feature information positioned close to first feature information output in accordance with first acoustic sub-data. The plurality of foregoing specific recognition items are illustrative, and the present invention is not limited thereto.

A possibility value corresponding to each recognition item may be information on accuracy estimated for each recognition item. For example, the acoustic recognition model may generate a plurality of pieces of recognition item information using sound identification information which matches feature information positioned close to first feature information output in accordance with first acoustic sub-data. In this case, a higher possibility value may be calculated when the first feature information is closer to feature information corresponding to each piece of the sound identification information, and a lower possibility value may be calculated when the first feature information is farther from feature information corresponding to each piece of the sound identification information.

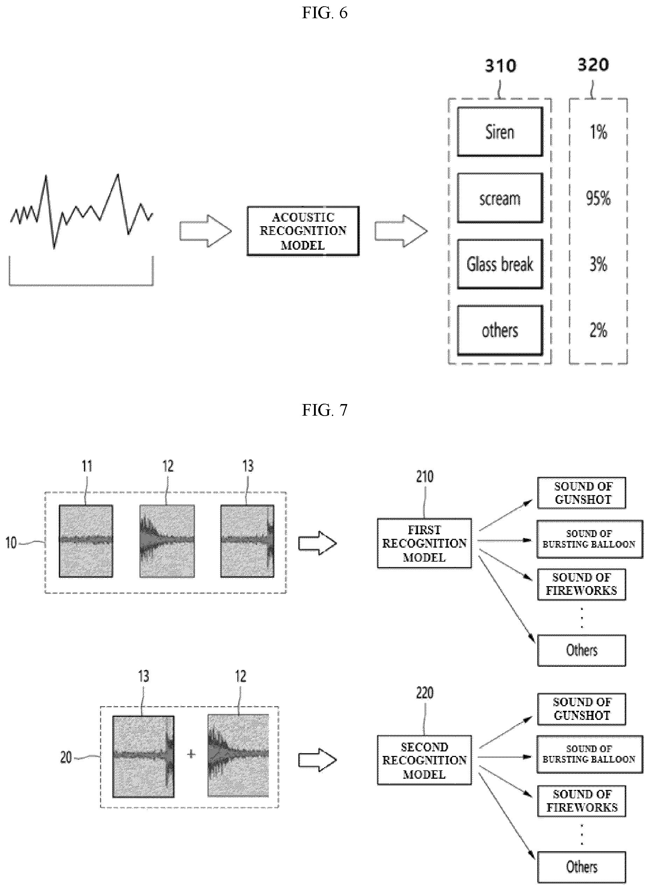

As a specific example, as shown in FIG. 6, the acoustic recognition model (or the first recognition model 210) may output a plurality of recognition items 310 representing that first acoustic sub-data relates to "a sound of a siren," "a sound of screaming," "a sound of breaking glass," and "other sounds." Also, the acoustic recognition model may output possibility values 320 of "1," "95," "3," and "2" for the recognition items 310. In other words, the acoustic recognition model may output the possibility values 320 representing that a possibility of the first acoustic sub-data being related to a sound of a siren is 1%, a possibility of the first acoustic sub-data being related to a sound of screaming is 95%, a possibility of the first acoustic sub-data being related to a sound of breaking glass is 3%, and a possibility of the first acoustic sub-data being related to other sounds is 2%. The foregoing specific recognition items and possibility values are illustrative, and the present invention is not limited thereto.

In other words, the server 100 may output recognition items each corresponding to a plurality of pieces of acoustic sub-data generated on the basis of acoustic data and possibility values corresponding to the recognition items through the acoustic recognition model. For example, the acoustic recognition model may output first recognition items and possibility values each corresponding to the first recognition items in accordance with first acoustic sub-data and output second recognition items and possibility values each corresponding to the second recognition items in accordance with second acoustic sub-data.

According to an exemplary embodiment, the first recognition model 210 may calculate a possibility value of each recognition item and generate acoustic recognition result information on the basis of a recognition item corresponding to the maximum of the calculated possibility values. For example, referring to FIG. 6, acoustic recognition result information indicating that a recognition result of acoustic sub-data is screaming is generated from a recognition item corresponding to the maximum possibility value of 95%.

Also, according to an exemplary embodiment, the first recognition model 210 may calculate a possibility value of each recognition item and generate acoustic recognition result information in accordance with whether the calculated possibility value exceeds a threshold possibility value preset for the recognition item.

According to various exemplary embodiments, a plurality of acoustic recognition models of the present invention may be provided. The acoustic recognition model may include the first recognition model 210 and a second recognition model 220. In this case, acoustic sub-data used as an input to the second recognition model 220 may have a different length than that used as an input to the first recognition model 210. The second recognition model 220 may be a neural network model with higher performance than the first recognition model 210. For example, the first recognition model 210 may be a neural network model that is trained to derive an acoustic recognition result on the basis of acoustic sub-data of 1-second units while the second recognition model 220 may be a neural network model that is trained to derive an acoustic recognition result on the basis of acoustic sub-data of 2-second units. In other words, the first recognition model 210 and the second recognition model 220 are neural network models with different performance, and the second recognition model 220 with higher performance is utilized for verification. According to an exemplary embodiment, the first recognition model 210 may be a neural network model that recognizes acoustic sub-data of relatively short periods and outputs the results, and the second recognition model 220 may be a neural network model that recognizes acoustic sub-data of relatively long periods and outputs the results.

Since the first recognition model 210 analyzes sounds of short periods, the amount of computation is small, and low computing power is consumed accordingly. On the other hand, the second recognition model 220 analyzes sounds of relatively long periods, which increases the amount of computation, and thus it is difficult to install and use the second recognition model 220 on a low-cost device. However, due to the long recognition periods, outputs have high accuracy.

According to various exemplary embodiments, the server 100 may determine whether to perform verification using another neural network model (e.g., the second recognition model 220) on the basis of an output result, that is, acoustic recognition result information, corresponding to the first recognition model 210. This is intended to reduce the amount of computation and the consumption of computing power by usually utilizing the lightweight first recognition model 210 and utilizing an additional neural network model only when output accuracy is degraded.

The server 100 may select verification acoustic sub-data that is acoustic sub-data to be verified on the basis of acoustic recognition result information which is output in accordance with each piece of acoustic sub-data by the first recognition model 210. When it is determined that acoustic recognition result information is related to a previously classified item (e.g., an item to be verified) or the accuracy of the acoustic recognition result information is not high enough, the server 100 may perform verification and also select acoustic sub-data to be verified.

According to a specific embodiment, the server 100 may calculate a similarity score between recognition items calculated by the first recognition model 210 and select verification acoustic sub-data on the basis of the calculated similarity scores.

For example, the first recognition model 210 may output the recognition items "a sound of a gunshot," "a sound of a bursting balloon," and "a sound of fireworks" in accordance with specific acoustic sub-data, and possibility values of the recognition items may be calculated as 85%, 90%, and 94%, respectively. In this case, acoustic recognition result information may be generated on the basis of "fireworks" which has the highest possibility value. Meanwhile, the server 100 may calculate a similarity score between recognition items output by the first recognition model 210. According to an exemplary embodiment, a similarity score between recognition items may be calculated on the basis of similarity evaluation between sounds corresponding to the items. As an example, representative acoustic sub-data corresponding to each recognition item may be input to the dimensionality reduction network function to acquire an embedding corresponding to the recognition item, and similarity between recognition items may be evaluated using embedding similarity. As another example, similarity between recognition items may be evaluated using cosine similarity for measuring similarity by calculating a cosine angle between embedded word vectors. As another example, a model based on a Siamese network and a transformer may be utilized to determine semantic text similarity. The foregoing inter-keyword similarity evaluation methods are illustrative, and the present invention is not limited thereto. According to an additional embodiment, similarity between keywords or words may be measured using a Jaccard index, a Euclidean distance, or WordNet.

A similarity score is derived on the basis of similarity evaluation between recognition items output by the first recognition model 210. When the similarity between recognition items is higher, a higher similarity value is calculated, and when the similarity between recognition items is lower, a lower similarity value is calculated. According to an exemplary embodiment, when the similarity between recognition items is higher, the output accuracy of the first recognition model 210 may be degraded.

For example, when the first recognition model 210 outputs the recognition items "a sound of screaming," "a sound of a collision," and "a sound of rain" from A acoustic sub-data, acoustic similarity between the items is low, and thus low similarity scores are calculated. In other words, when recognition items which are candidates for a result estimation are more different, features of the items are evidently different, and thus outputs of the first recognition model 210 are ensured. On the other hand, when the first recognition model 210 outputs the recognition items "a sound of a gunshot," "a sound of a bursting balloon," and "a sound of fireworks" from B acoustic sub-data, acoustic similarity between the items is high, and thus high similarity scores may be calculated. In other words, since the recognition items which are candidates for a result estimation are very similar, it is difficult to distinguish between features of the items, which may degrade the reliability of the outputs of the first recognition model 210.

In other words, when recognition items having acoustic feature elements that are not similar at all (e.g., a sound of screaming, a sound of something breaking, and a sound of rain) are output, a finally output recognition result is highly likely to be accurate (since acoustic features of the recognition items are completely different, the neural network is highly likely to provide an accurate output), but when recognition items having acoustic feature elements with high similarity (e.g., a sound of gunshot, a sound of a firecracker, and a sound of fireworks) are output, a finally output recognition result is highly likely to be slightly inaccurate.

Therefore, the server 100 may calculate similarity scores between recognition items output by the first recognition model 210 to determine whether acoustic recognition result information is reliable. When the similarity scores between the recognition items are low (i.e., a certain reference value or less), the server 100 may determine that the acoustic recognition result information is reliable and may not perform verification on acoustic sub-data. On the other hand, when the similarity scores between the recognition items are high (i.e., exceed the certain reference value), the server 100 may determine that the reliability of the acoustic recognition result information is low, and select the acoustic sub-data as verification acoustic sub-data to be verified.

According to an exemplary embodiment, verification of acoustic sub-data may involve deriving acoustic recognition result information again using the second recognition model 220.

Also, when possibility values of a plurality of recognition items exceed a preset threshold reference value among possibility values of recognition items calculated by the first recognition model 210, the server 100 may select acoustic sub-data from which acoustic recognition result information is calculated as verification acoustic sub-data to be verified.

For example, the first recognition model 210 may output the recognition items "a gunshot," "a burst of a balloon," and "a firecracker" and calculate possibility values of the recognition items as 85%, 90%, and 94%, respectively. In this case, acoustic recognition result information is generated on the basis of "fireworks" which has the highest possibility value. However, all the other recognition items may have higher possibility values than threshold reference values (e.g., 82%, 85%, and 88%) preset for the recognition items. Since it is determined by the first recognition model 210 that the other recognition items also have high possibilities, this may represent that the reliability of the acoustic recognition result information is slightly degraded. For example, when recognition items a, b, and c have probability values of 97%, 6%, and 3%, respectively, only recognition item a has the probability value exceeding a preset threshold reference value (e.g., 80%), and thus the reliability of the acoustic recognition result information may be high.

In other words, when a smaller number of recognition items have probabilities exceeding threshold reference values for the recognition items, a finally output recognition result is highly likely to be accurate (e.g., when a probability value of one recognition item exceeds a threshold reference value, the reliability of the recognition result may be the highest), but when a larger number of recognition items have probabilities exceeding threshold reference values for the recognition items, a finally output recognition result is highly likely to be slightly inaccurate.

Therefore, the server 100 may identify whether possibility values of a plurality of recognition items exceed a preset threshold value among possibility values of recognition items calculated by the first recognition model 210 to determine whether acoustic recognition result information is reliable. When one recognition item has a probability value exceeding a threshold value, the server 100 may determine acoustic recognition result information to be reliable and may not perform verification on acoustic sub-data. On the other hand, when a plurality of (i.e., two or more) recognition items have probability values exceeding a threshold value, the server 100 may determine acoustic recognition result information to be inaccurate and select the acoustic sub-data as verification acoustic sub-data to be verified.

According to an exemplary embodiment, an operation of selecting verification acoustic sub-data may include an operation of identifying whether acoustic recognition result information related to an output of the first recognition model 210 is included in preset verification items and an operation of selecting acoustic sub-data from which the acoustic recognition result information is calculated as verification acoustic sub-data to be verified when the acoustic recognition result information is included in the preset verification items.

The preset verification items may be a combination of predefined items of which output accuracy is expected to slightly degrade. For example, it is difficult to determine which one of a gunshot, a bursting balloon, a firecracker, and fireworks corresponds to an explosive sound because those sounds have similar acoustic features. Accordingly, when acoustic recognition result information is generated as one of those sounds, the reliability of the acoustic recognition result information is not ensured.

Therefore, according to the present invention, the preset verification items may be set by storing items of which acoustic features are difficult to distinguish in advance. When the first recognition model 210 outputs acoustic recognition result information included in the preset verification items, the server 100 may select acoustic sub-data from which the acoustic recognition result information is generated as verification acoustic sub-data to be verified.

In other words, preset verification items may be set in advance on the basis of similar sounds that are difficult to distinguish, and when an output (i.e., acoustic recognition result information) of the first recognition model 210 corresponds to a preset verification item, corresponding acoustic sub-data may be determined as verification acoustic sub-data.

According to an exemplary embodiment, an operation of generating acoustic recognition result information may include an operation S312 of generating combined verification acoustic sub-data on the basis of the selected verification acoustic sub-data.

Specifically, when verification acoustic sub-data is selected, the server 100 may identify additional acoustic sub-data before and after the verification acoustic sub-data. Also, the server 100 may combine the verification acoustic sub-data and the additional acoustic sub-data together to generate combined verification acoustic sub-data.

In an exemplary embodiment, the operation of generating acoustic recognition result information may include an operation S313 of inputting the combined verification acoustic sub-data to the second recognition model 220 to generate acoustic recognition result information.

According to an exemplary embodiment, the acoustic recognition model of the present invention may include the second recognition model 220 that receives combined verification acoustic sub-data generated by combining a plurality of pieces acoustic sub-data as an input and provides an output corresponding to the combined verification acoustic sub-data.

In this case, acoustic sub-data used as an input to the second recognition model 220 may have a different length than that used as an input to the first recognition model 210. The second recognition model 220 may be a neural network model with higher performance than the first recognition model 210. For example, the first recognition model 210 may be a neural network model that is trained to derive an acoustic recognition result on the basis of acoustic sub-data of 1-second units while the second recognition model 220 may be a neural network model that is trained to derive an acoustic recognition result on the basis of acoustic sub-data of 2-second units. In other words, the first recognition model 210 and the second recognition model 220 are neural network models with different performance, and the second recognition model 220 with higher performance is utilized for verification. According to an exemplary embodiment, the first recognition model 210 may be a neural network model that recognizes acoustic sub-data of relatively short periods and outputs the results, and the second recognition model 220 may be a neural network model that recognizes acoustic sub-data of relatively long periods and outputs the results.

According to an exemplary embodiment, the second recognition model 220 may be implemented through a cloud API. When the second recognition model 220 is implemented through a cloud API, the second recognition model 220 with relatively high performance can be utilized on a low-performance device.

As a specific example, referring to FIG. 7, a plurality of pieces acoustic sub-data (first acoustic sub-data 11, second acoustic sub-data 12, and third acoustic sub-data 13) generated in accordance with acoustic data 10 may be first input to the lightweight first recognition model 210 with relatively low performance to output acoustic recognition result information.

Here, when acoustic recognition result information first output in accordance with the second acoustic sub-data 12 is determined to be slightly unreliable, the acoustic sub-data (i.e., the second acoustic sub-data) corresponding to the acoustic recognition result information may be selected as verification acoustic sub-data to be verified.

In this case, the server 100 may identify additional acoustic sub-data generated before and after the second acoustic sub-data 12. For example, the third acoustic sub-data 13 which is acoustic sub-data generated at a time point adjacent to the second acoustic sub-data 12 may be identified as additional acoustic sub-data.

The server 100 combines the verification acoustic sub-data and the additional acoustic sub-data together to generate combined verification acoustic sub-data. In other words, combined verification acoustic sub-data 20 may be generated by combining the second acoustic sub-data 12 and the third acoustic sub-data 13.

In this case, the combined verification acoustic sub-data 20 is generated by combining the acoustic sub-data and thus may have a larger length than the acoustic sub-data initially input to the first recognition model 210. In other words, when it is determined that recognition results of acoustic sub-data may be inaccurate, combined verification acoustic sub-data may be generated to verify the acoustic sub-data which results in inaccurate outputs.

The server 100 may input the combined verification acoustic sub-data 20 to the second recognition model 220 to output acoustic recognition result information. In this case, the second recognition model 220 is a neural network model that recognizes acoustic sub-data of longer periods than that recognized by the first recognition model 210 and thus derives acoustic recognition results by analyzing acoustic sub-data of longer periods (i.e., the combined verification acoustic sub-data 20) than that recognized by the first recognition model 210. Accordingly, the second recognition model 220 can generate acoustic recognition result information with relatively high accuracy.

In other words, the server 100 normally utilizes the first recognition model that is relatively light and utilizes the second recognition model only to perform verification as necessary. Therefore, it is possible to effectively reduce the amount of computation and also improve the reliability of a recognition result.

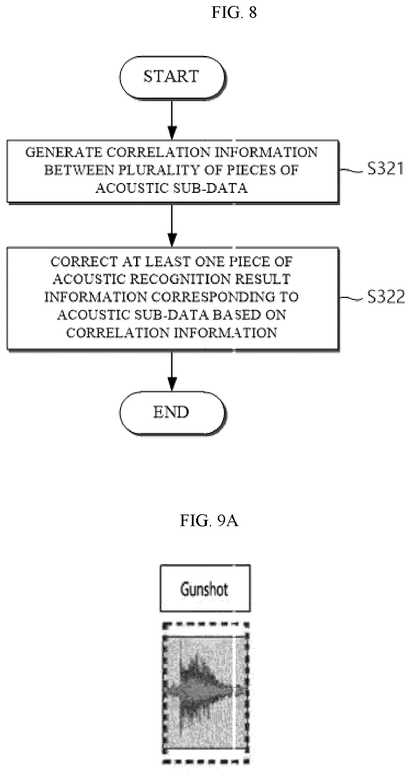

FIG. 8 is a flowchart illustrating a process of correcting acoustic recognition result information on the basis of correlation between acoustic sub-data according to an exemplary embodiment of the present invention.

According to an exemplary embodiment, the operation of generating acoustic recognition result information may include an operation S321 of generating correlation information between a plurality of pieces of acoustic recognition result information. Correlation information may be information representing correlation between acoustic recognition result information. For example, when first acoustic recognition result information generated as a recognition result of first acoustic sub-data corresponding to a first period is "a sound of a gunshot" and second acoustic recognition result information generated as a recognition result of second acoustic sub-data corresponding to a second period is "a sound of applause," the server 100 may generate correlation information that there is no correlation between the first acoustic recognition result information and the second acoustic recognition result information. The foregoing specific acoustic recognition result information and correlation information are illustrative, and the present invention is not limited thereto.

Also, the operation of generating acoustic recognition result information may include an operation S322 of correcting at least one piece of acoustic recognition result information corresponding to acoustic sub-data on the basis of the correlation information. The server 100 may correct at least one piece of acoustic recognition result information on the basis of the correlation information between the acoustic recognition result information. The server 100 may determine whether to correct acoustic recognition result information on the basis of correlation information between the acoustic recognition result information.

According to a specific embodiment, in the operation S322 of correcting at least one piece of acoustic recognition result information, when first acoustic recognition result information and second acoustic recognition result information are generated in a preset time, at least one of the first acoustic recognition result information and the second acoustic recognition result information is corrected on the basis of correlation information between the first acoustic recognition result information and the second acoustic recognition result information.

In other words, the server 100 may perform postprocessing correction on at least some acoustic recognition result information on the basis of the acoustic recognition result information output in a certain time. The acoustic data is divided at certain time intervals and input to a neural network, and acoustic recognition result information is derived from each divided piece of the data. The server 100 may generate correlation information between acoustic recognition results output in the certain time and correct specific acoustic recognition result information using another acoustic recognition result on the basis of the correlation information in accordance with correlation between the acoustic recognition results generated at adjacent time points.

This configuration is intended to improve accuracy over generating acoustic recognition result information on the basis of acoustic sub-data only. For example, when an acoustic recognition result of sound B (e.g., applause) is output within n seconds after an acoustic recognition result of sound A (e.g., a gunshot) is output, the recognition result of sound A may be corrected into sound C (e.g., a firecracker). In other words, at least one of acoustic recognition results which are output (or recognized) in a certain time is corrected in consideration of correlation between the acoustic recognition results such that recognition accuracy can be improved.

As a specific example, when a single frame (i.e., one piece of acoustic sub-data) shown in FIG. 9A is input to an acoustic recognition model, the acoustic recognition result information "gunshot" may be generated. Since this is a result simply obtained by analyzing one piece of acoustic sub-data related to an explosive sound, high accuracy is not ensured. For example, in the case of a gunshot, there are many sounds, such as a firecracker, fireworks, a bursting balloon, and the like, that have similar acoustic features, which may slightly degrade accuracy.

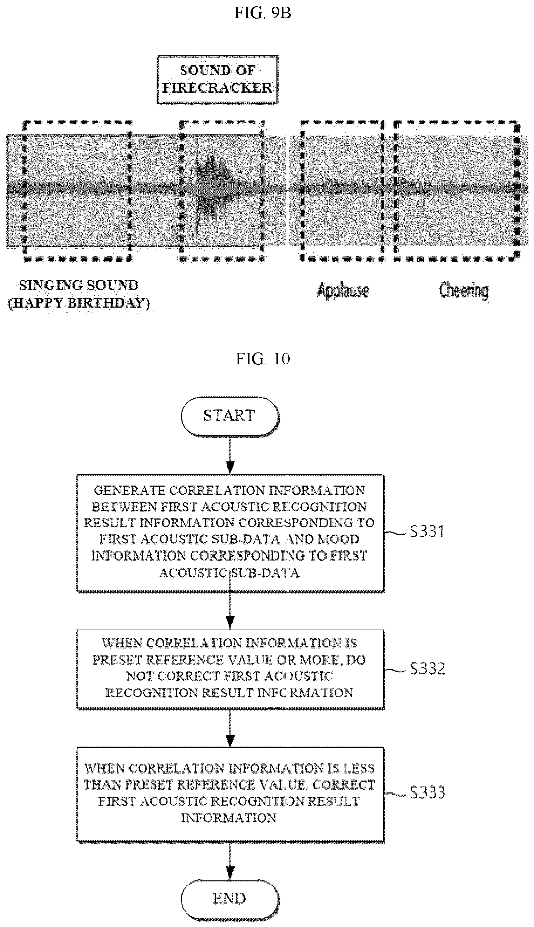

As shown in FIG. 9B, acoustic recognition result information corresponding to frames existing in a certain time from specific acoustic recognition result information (i.e., a gunshot) may be identified as a sound of a birthday song, a sound of applause, and a sound of cheering. On the basis of the other acoustic recognition result information output in the certain time, the server 100 may generate correlation information that the specific acoustic recognition result (i.e., a gunshot) is not related to other acoustic recognition result information. Accordingly, the specific acoustic recognition result information is corrected into another acoustic recognition result through postprocessing. In other words, the initially output acoustic recognition result "gunshot" may be corrected into other acoustic recognition result information "firecracker" on the basis of the correlation information which is generated on the basis of correlation with other acoustic recognition result information (e.g., the sound of a birthday song, the sound of applause, and the sound of cheering) output in the certain time. According to an exemplary embodiment, the server 100 may identify that the initial output "gunshot" is included in a specific item (e.g., an item corresponding to explosive sounds) and select another kind of keyword included in the specific item to correct the acoustic recognition result information. The server 100 may select a keyword (e.g., firecracker sound) associated with other acoustic recognition results from among other kinds of sounds included in the specific item to correct the initially output acoustic recognition result information. Accordingly, the initially output acoustic recognition result information "gunshot" is corrected into "a sound of a firecracker."

In other words, the server 100 can improve recognition accuracy by performing postprocessing correction on at least one piece of acoustic recognition result information in consideration of correlation between the acoustic recognition result information that is output (or recognized) in a certain time. In other words, the server 100 identifies specific acoustic recognition result information which is unrelated to acoustic recognition result information output at adjacent time points and corrects the specific acoustic recognition result information into other acoustic recognition result information associated with the acoustic recognition result information output at the adjacent time points to improve the accuracy of an acoustic recognition result.

FIG. 10 is a flowchart illustrating a process of generating acoustic recognition result information in consideration of surroundings and an atmosphere according to an exemplary embodiment of the present invention.

According to an exemplary embodiment, the server 100 may generate mood information corresponding to acoustic recognition result information using the mood identification model. The mood identification model may be a neural network model that is trained to recognize acoustic recognition result information and output mood information corresponding to surroundings at each time point.

The mood information is estimation information of an atmosphere related to a space from which acoustic data is acquired, and may include place estimation information and emotion estimation information.

The mood identification model may be a neural network model that identifies a real-time atmosphere on the basis of acoustic recognition result information derived from each piece of acoustic sub-data. From acoustic recognition result information, the mood identification model may generate mood information including estimation information about a place from which acoustic data is currently acquired and estimation information about an atmosphere in which the acoustic data is acquired. The mood identification model may analyze keywords and a pitch of a voice to analyze a user's emotion and recognize where a conversation takes place. According to an exemplary embodiment, the mood identification model may include a natural language processing model and an emotion analysis model. The natural language processing model is utilized to understand and process text data (e.g., acoustic recognition result information), and the emotion analysis model may be utilized to detect an emotion included in a sentence.

As an example, when it is detected that acoustic recognition result information related to driving noise of a vehicle is continuously acquired, it may be determined that a place from which acoustic data is currently acquired is a "traveling vehicle." As another example, when it is detected that acoustic recognition result information of gradually higher tones is acquired, it may be determined that a real-time atmosphere is related to the emotion "anger." The foregoing specific place and emotion are illustrative, and the present invention is not limited thereto.

The server 100 may generate acoustic recognition result information on the basis of mood information generated by the mood identification model and acoustic sub-data. This is intended to recognize situations or atmospheres before and after the acoustic sub-data is input, and generate acoustic recognition result information with high accuracy by considering the situations or atmospheres.

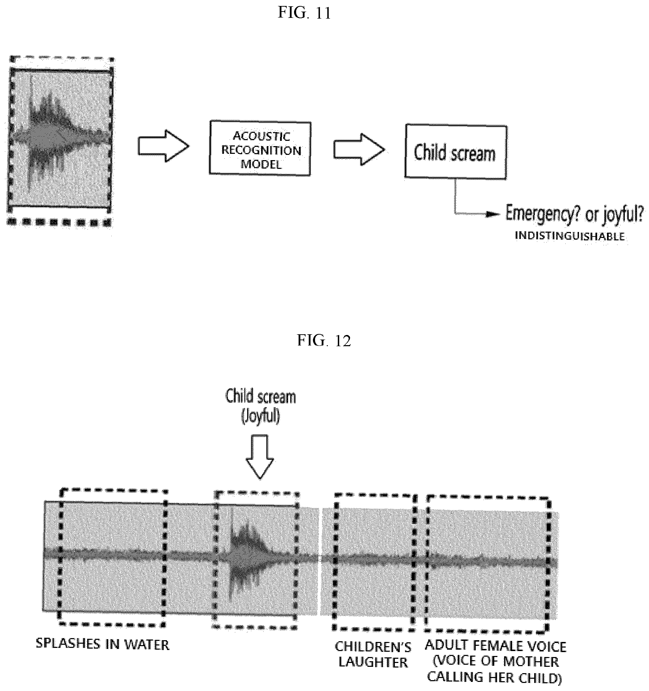

Referring to FIG. 11, the acoustic recognition result information "child's scream" may be derived by inputting specific acoustic sub-data to the acoustic recognition model. However, it may be difficult to distinguish whether the scream of the child is related to an emergency or is a joyful scream. In other words, not all screams represent an emergency, and thus it is necessary to determine whether the scream is related to an emergency or made in a joyful situation. According to the present invention, mood information corresponding to an atmosphere of adjacent time points of specific acoustic sub-data may be generated by a mood identification model, and thus it is possible to derive appropriate acoustic recognition result information for a situation.

The server 100 may identify an atmosphere, that is, mood information, before and after acoustic sub-data and generate appropriate acoustic recognition result information using the mood information. For example, the server 100 may detect "splashes in the water," "children's laughter," "the voice of a mother calling for her child," and the like at adjacent time points as shown in FIG. 12 and generate the acoustic recognition result information of "a child's scream in a joyful situation" in accordance with specific acoustic sub-data.

According to a specific embodiment, the operation of generating acoustic recognition result information may include an operation S331 of generating correlation information between first acoustic recognition result information corresponding to first acoustic sub-data and mood information corresponding to the first acoustic sub-data.

According to an exemplary embodiment, correlation information may be information showing a value of correlation between mood information and acoustic recognition result information generated in real time. For example, when mood information relates to "happy emotion" and acoustic recognition result information relates to "a sound of a gunshot," the server 100 may determine that there is low correlation between the mood information and the acoustic recognition result information, and generate correlation information that there is correlation of 20% between the mood information and the acoustic recognition result information. As another example, when mood information relates to "emotions of anger and fear" and acoustic recognition result information relates to "a sound of a gunshot," the server 100 may determine that there is high correlation between the mood information and the acoustic recognition result information, and generate correlation information that there is correlation of 93% between the mood information and the acoustic recognition result information. The foregoing specific description of correlation information generation is illustrative, and the present invention is not limited thereto.

The operation of generating acoustic recognition result information may include an operation S332 of not correcting the first acoustic recognition result information when the correlation information is a preset reference value or more. The preset reference value is predetermined by the user and may be a criterion for determining whether acoustic recognition result information which is output in real time is appropriate. When correlation information between acoustic recognition result information and mood information is the preset reference value or more, the currently output acoustic recognition result information may be determined to be appropriate and may not be corrected.

The operation of generating acoustic recognition result information may include an operation S333 of correcting the first acoustic recognition result information when the correlation information is less than the preset reference value. When correlation information between acoustic recognition result information and mood information is less than the preset reference value, this represents that the accuracy of the currently output acoustic recognition result information is degraded, and thus it is necessary to correct the currently output acoustic recognition result information.

More specifically, the server 100 may identify a plurality of keywords that are similar to the first acoustic recognition result information. For example, when the first acoustic recognition result information is "a sound of a gunshot," the server 100 may identify "a sound of a firecracker," "a sound of fireworks," "a sound of a bursting balloon," and the like as a plurality of keywords. The foregoing specific description of first acoustic recognition result information and a plurality of keywords are illustrative, and the present invention is not limited thereto.

Also, the server 100 may generate a plurality of pieces of correlation sub-information between a plurality of keywords and the mood information. In other words, a degree of correlation between each keyword and mood information may be calculated to generate a plurality of pieces of correlation sub-information. For example, when mood information is "happy atmosphere," first correlation sub-information of 93% may be generated for a sound of a firecracker, second correlation sub-information of 82% may be generated for a sound of fireworks, and third correlation sub-information of 76% may be generated for a sound of a bursting balloon. The foregoing specific values of correlation sub-information are illustrative, and the present invention is not limited thereto.

The server 100 may identify maximum correlation sub-information corresponding to the maximum of the plurality of pieces of correlation sub-information and correct the first acoustic recognition result information on the basis of a keyword corresponding to the maximum correlation sub-information. For example, the server 100 may correct the first acoustic recognition result information on the basis of a keyword (i.e., firecracker) corresponding to the maximum correlation sub-information (93%).

In other words, when it is determined that specific acoustic recognition result information does not match mood information (i.e., when correlation information between the acoustic recognition result information and the mood information is less than the preset reference value), the server 100 may correct the specific acoustic recognition result information using a keyword most highly associated with the mood information among keywords similar to the acoustic recognition result.

The operations of a method or algorithm described above in connection with exemplary embodiments of the present invention may be implemented directly by hardware, a software module executed by hardware, or a combination thereof. The software module may be stored in a RAM, a ROM, an EPROM, an EEPROM, a flash memory, a hard disk, a detachable disk, a CD-ROM, or any type of computer-readable recording medium well known in the technical field to which the present invention pertains.

Components of the present invention may be embodied in the form of a program (or application) and stored in a medium to be executed in combination with a computer which is hardware. The components of the present invention may be implemented by software programming or software elements, and similarly, embodiments may be implemented in a programming or scripting language, such as C, C++, Java, an assembler, or the like, to include various algorithms implemented as a combination of data structures, processes, routines, or other programming components. Functional aspects may be embodied as an algorithm executed by one or more processors.

According to various embodiments of the present invention, acoustic data is divided in time-period units to increase a recognition rate while reducing the amount of computation during a process of recognizing acoustic data of each period, and it is possible to provide an acoustic recognition result with improved accuracy in accordance with various surroundings.

Effects of the present invention are not limited to that described above, and other effects which have not been described above will be clearly understood by those skilled in the art from the above description.

Although exemplary embodiments of the present invention have been described above with reference to the accompanying drawings, it will be obvious to those of ordinary skill in the art that the present invention may be embodied in other specific forms without departing from scope of the invention as defined by the claims. Therefore, it is to be understood that the above-described embodiments are illustrative in all aspects and not limiting.

## Claims

1. A method of providing an acoustic recognition result with improved reliability by one or more processors of a computing device, the method comprising:
acquiring acoustic data representing a time-domain waveform of a sound (S1000);
generating a plurality of pieces of acoustic sub-data by dividing the acoustic data (10) in preset sized time units (S200); and
generating an acoustic recognition result corresponding to each piece of acoustic sub-data (11a-18a) by inputting the plurality of pieces of acoustic sub-data to an acoustic recognition model,
wherein the acoustic recognition model includes a first recognition model (210) configured to provide a plurality of outputs each corresponding to the plurality of pieces of acoustic sub-data using the plurality of pieces of acoustic sub-data as inputs, and a second recognition model (220) configured to provide an output corresponding to combined verification acoustic sub-data (20), using the combined verification acoustic sub-data (20) as an input,
wherein the generating of the combined verification acoustic sub-data (20) comprises:
selecting verification acoustic sub-data, which is to be verified, on the basis of an acoustic recognition result which is output in accordance with the plurality of pieces of acoustic sub-data by the first recognition model (S311);
identifying additional acoustic sub-data generated in a time unit adjacent to that of the verification acoustic sub-data; and
combining the verification acoustic sub-data (20) and the additional acoustic sub-data;
wherein the generating of the acoustic recognition result comprises inputting the combined verification acoustic sub-data to the second recognition model (220),
wherein the second recognition model (220) is implemented through a cloud application programming interface (API), and
wherein the selecting of the verification acoustic sub-data comprises:
deriving a similarity score between recognition items related to the outputs of the first recognition model (210), wherein recognition items correspond to sound event labels identified for each piece of acoustic sub-data, and wherein the similarity score is calculated on the basis of similarity evaluation between the recognition items related to the outputs of the first recognition model (210); and
selecting verification acoustic sub-data on the basis of the calculated similarity score.

2. The method of claim 1, wherein the selecting of the verification acoustic sub-data (20) comprises:
identifying whether an acoustic recognition result output by the first recognition model (210) is included in preset verification items, wherein the preset verification items are predefined items stored in advance which are set on the basis of similar sounds that are difficult to distinguish; and
when the acoustic recognition result is included in the preset verification items, selecting acoustic sub-data from which the acoustic recognition result is calculated as verification acoustic sub-data which is to be verified.

3. The method of claim 1, wherein the first recognition model (210) calculates a probability value specific to each recognition item, representing the probability that the acoustic sub-data (11a-18a) relates to the recognition item, and outputs, as an acoustic recognition result, the recognition item corresponding to a maximum of the calculated probability values, and
the selecting of the verification acoustic sub-data (20) comprises, when two or more of the recognition-item-specific probability values calculated by the first recognition model (210) exceed a preset threshold reference value, selecting acoustic sub-data from which the acoustic recognition result is calculated as verification acoustic sub-data which is to be verified.

4. The method of claim 1, further comprising postprocessing correction on the acoustic recognition results, the postprocessing correction comprising:
generating result correlation information between a plurality of acoustic recognition results, the result correlation information indicating whether the plurality of acoustic recognition results are related to each other; and
correcting at least one of the acoustic recognition results on the basis of the correlation information.

5. The method of claim 4, wherein the correcting of the at least one of the acoustic recognition results comprises, when a first acoustic recognition result and a second acoustic recognition result are generated in a preset time, correcting at least one of the first acoustic recognition result and the second acoustic recognition result on the basis that the first acoustic recognition result and the second acoustic recognition result are unrelated.

6. The method of claim 1, further comprising generating mood information corresponding to the acoustic recognition result using a mood identification module,
wherein the mood information includes place estimation information and emotion estimation information as estimation information of an atmosphere related to a space from which the acoustic data is acquired,
wherein the generating of the acoustic recognition result comprises:
generating mood correlation information between a first acoustic recognition result corresponding to first acoustic sub-data and mood information corresponding to the first acoustic sub-data, the mood correlation information comprising a numerical value indicating whether the first acoustic recognition result and the mood information of the first acoustic sub-data are related to each other;
not correcting the first acoustic recognition result when the correlation information is a preset reference value or more; and
correcting the first acoustic recognition result when the correlation information is less than the preset reference value, and
the mood identification model is a neural network model that is trained to recognize the acoustic recognition result and output the mood information corresponding to surroundings of each piece of acoustic sub-data.

7. The method of claim 6, wherein the correcting of the first acoustic recognition result comprises:
identifying a plurality of keywords that correspond to sounds which are similar to the first acoustic recognition result;
generating a plurality of pieces of correlation sub-information between a plurality of keywords and the mood information, wherein the pieces of correlation sub-information comprise a numerical value indicating a degree of correlation between each keyword and the mood information of the first acoustic sub-data; and
identifying maximum correlation sub-information corresponding to a maximum of the plurality of pieces of correlation sub-information and correcting the first acoustic recognition result on the basis of a keyword corresponding to the maximum correlation sub-information.

8. A device comprising:
a memory (120) configured to store one or more instructions; and
a processor (110) configured to execute the one or more instructions stored in the memory,
wherein the processor (110) is arranged to perform the method of any one of the preceding claims by executing the one or more instructions.

9. A computer-readable recording medium containing a program for executing a method according to any one of claims 1 to 7 to provide an acoustic recognition result using a computing device.

## Patentansprüche

1. Verfahren zum Bereitstellen eines akustischen Erkennungsergebnisses mit verbesserter Zuverlässigkeit durch einen oder mehrere Prozessoren einer Rechenvorrichtung, wobei das Verfahren Folgendes umfasst:
Erfassen von akustischen Daten, die eine Zeitbereichswellenform eines Tons darstellen (S1000);
Erzeugen einer Vielzahl von Teilen von akustischen Unterdaten durch Aufteilen der akustischen Daten (10) in Zeiteinheiten mit vorab festgelegter Größe (S200); und
Erzeugen eines akustischen Erkennungsergebnisses entsprechend jedem Teil von akustischen Unterdaten (11a-18a) durch Eingeben der Vielzahl von Teilen von akustischen Unterdaten in ein akustisches Erkennungsmodell,
wobei das akustische Erkennungsmodell ein erstes Erkennungsmodell (210), das dazu konfiguriert ist, eine Vielzahl von Ausgaben jeweils entsprechend der Vielzahl von Teilen von akustischen Unterdaten unter Verwendung der Vielzahl von Teilen von akustischen Unterdaten als Eingaben bereitzustellen, und ein zweites Erkennungsmodell (220), das dazu konfiguriert ist, eine Ausgabe entsprechend kombinierten akustischen Verifizierungsunterdaten (20) unter Verwendung der kombinierten akustischen Verifizierungsunterdaten (20) als eine Eingabe bereitzustellen, beinhaltet,
wobei das Erzeugen der kombinierten akustischen Verifizierungsunterdaten (20) Folgendes umfasst:
Auswählen von akustischen Verifizierungsunterdaten, die zu verifizieren sind, auf der Grundlage eines akustischen Erkennungsergebnisses, das gemäß der Vielzahl von Teilen von akustischen Unterdaten durch das erste Erkennungsmodell ausgegeben wird (S311);
Identifizieren von zusätzlichen akustischen Unterdaten, die in einer Zeiteinheit benachbart zu derjenigen der akustischen Verifizierungsunterdaten erzeugt werden; und
Kombinieren der akustischen Verifizierungsunterdaten (20) und der zusätzlichen akustischen Unterdaten;
wobei das Erzeugen des akustischen Erkennungsergebnisses Eingeben der kombinierten akustischen Verifizierungsunterdaten in das zweite Erkennungsmodell (220) umfasst,
wobei das zweite Erkennungsmodell (220) durch eine Cloud-Anwendungsprogrammierschnittstelle (API) implementiert ist und
wobei das Auswählen der akustischen Verifizierungsunterdaten Folgendes umfasst:
Ableiten einer Ähnlichkeitsbewertung zwischen Erkennungselementen, die sich auf die Ausgaben des ersten Erkennungsmodells (210) beziehen, wobei Erkennungselemente Tonereignisbezeichnungen entsprechen, die für jedes Teil von akustischen Unterdaten identifiziert werden, und wobei die Ähnlichkeitsbewertung auf der Grundlage von Ähnlichkeitsevaluierung zwischen den Erkennungselementen, die sich auf die Ausgaben des ersten Erkennungsmodells (210) beziehen, berechnet wird; und
Auswählen von akustischen Verifizierungsunterdaten auf der Grundlage der berechneten Ähnlichkeitsbewertung.

2. Verfahren nach Anspruch 1, wobei das Auswählen der akustischen Verifizierungsunterdaten (20) Folgendes umfasst:
Identifizieren, ob ein akustisches Erkennungsergebnis, das durch das erste Erkennungsmodell (210) ausgegeben wird, in vorab festgelegten Verifizierungselementen beinhaltet ist, wobei die vorab festgelegten Verifizierungselemente vorab definierte Elemente sind, die im Voraus gespeichert sind, die auf der Grundlage von ähnlichen Tönen, die schwer zu unterscheiden sind, festgelegt sind; und,
wenn das akustische Erkennungsergebnis in den vorab festgelegten Verifizierungselementen beinhaltet ist, Auswählen von akustischen Unterdaten, aus denen das akustische Erkennungsergebnis berechnet wird, als akustische Verifizierungsunterdaten, die zu verifizieren sind.

3. Verfahren nach Anspruch 1, wobei das erste Erkennungsmodell (210) einen Wahrscheinlichkeitswert berechnet, der spezifisch für jedes Erkennungselement ist und der die Wahrscheinlichkeit darstellt, dass sich die akustischen Unterdaten (11a-18a) auf das Erkennungselement beziehen, und das Erkennungselement entsprechend einem Maximum der berechneten Wahrscheinlichkeitswerte als ein akustisches Erkennungsergebnis ausgibt und,
wenn zwei oder mehr der Erkennungselement-spezifischen Wahrscheinlichkeitswerte, die durch das erste Erkennungsmodell (210) berechnet werden, einen vorab festgelegten Schwellenreferenzwert überschreiten, das Auswählen der akustischen Verifizierungsunterdaten (20) Auswählen von akustischen Unterdaten, aus denen das akustische Erkennungsergebnis berechnet wird, als akustische Verifizierungsunterdaten, die zu verifizieren sind, umfasst.

4. Verfahren nach Anspruch 1, ferner umfassend Nachverarbeitungskorrektur an den akustischen Erkennungsergebnissen, wobei die Nachverarbeitungskorrektur Folgendes umfasst:
Erzeugen von Ergebniskorrelationsinformationen zwischen einer Vielzahl von akustischen Erkennungsergebnissen, wobei die Ergebniskorrelationsinformationen angeben, ob die Vielzahl von akustischen Erkennungsergebnissen miteinander in Beziehung stehen; und
Korrigieren von zumindest einem der akustischen Erkennungsergebnisse auf der Grundlage der Korrelationsinformationen.

5. Verfahren nach Anspruch 4, wobei, wenn ein erstes akustisches Erkennungsergebnis und ein zweites akustisches Erkennungsergebnis in einer vorab festgelegten Zeit erzeugt werden, das Korrigieren des zumindest einen der akustischen Erkennungsergebnisse Korrigieren von zumindest einem von dem ersten akustischen Erkennungsergebnis und dem zweiten akustischen Erkennungsergebnis auf der Grundlage, dass das erste akustische Erkennungsergebnis und das zweite akustische Erkennungsergebnis nicht miteinander in Beziehung stehen, umfasst.

6. Verfahren nach Anspruch 1, ferner umfassend Erzeugen von Stimmungsinformationen entsprechend dem akustischen Erkennungsergebnis unter Verwendung eines Stimmungsidentifizierungsmoduls,
wobei die Stimmungsinformationen Ortsschätzungsinformationen und Emotionsschätzungsinformationen als Schätzungsinformationen einer Atmosphäre beinhalten, die sich auf einen Raum bezieht, aus dem die akustischen Daten erfasst werden,
wobei das Erzeugen des akustischen Erkennungsergebnisses Folgendes umfasst:
Erzeugen von Stimmungskorrelationsinformationen zwischen einem ersten akustischen Erkennungsergebnis entsprechend ersten akustischen Unterdaten und Stimmungsinformationen entsprechend den ersten akustischen Unterdaten, wobei die Stimmungskorrelationsinformationen einen numerischen Wert umfassen, der angibt, ob das erste akustische Erkennungsergebnis und die Stimmungsinformationen der ersten akustischen Unterdaten miteinander in Beziehung stehen;
Nichtkorrigieren des ersten akustischen Erkennungsergebnisses, wenn die Korrelationsinformationen ein vorab festgelegter Referenzwert oder mehr sind; und
Korrigieren des ersten akustischen Erkennungsergebnisses, wenn die Korrelationsinformationen weniger als der vorab festgelegte Referenzwert sind, und
das Stimmungsidentifizierungsmodul ein neuronales Netzwerkmodell ist, das darauf trainiert ist, das akustische Erkennungsergebnis zu erkennen und die Stimmungsinformationen entsprechend von Umgebungen jedes Teils der akustischen Unterdaten auszugeben.

7. Verfahren nach Anspruch 6, wobei das Korrigieren des ersten akustischen Erkennungsergebnisses Folgendes umfasst:
Identifizieren einer Vielzahl von Schlüsselwörtern, die Tönen entsprechen, die dem ersten akustischen Erkennungsergebnis ähnlich sind;
Erzeugen einer Vielzahl von Teilen von Korrelationsunterinformationen zwischen einer Vielzahl von Schlüsselwörtern und den Stimmungsinformationen, wobei die Teile von Korrelationsunterinformationen einen numerischen Wert umfassen, der einen Grad an Korrelation zwischen jedem Schlüsselwort und den Stimmungsinformationen der ersten akustischen Unterdaten angibt; und
Identifizieren von maximalen Korrelationsunterinformationen entsprechend einem Maximum der Vielzahl von Teilen von Korrelationsunterinformationen und Korrigieren des ersten akustischen Erkennungsergebnisses auf der Grundlage eines Schlüsselwortes entsprechend den maximalen Korrelationsunterinformationen.

8. Vorrichtung, umfassend:
einen Speicher (120), der dazu konfiguriert ist, eine oder mehrere Anweisungen zu speichern; und
einen Prozessor (110), der dazu konfiguriert ist, die eine oder mehreren Anweisungen, die in dem Speicher gespeichert sind, auszuführen,
wobei der Prozessor (110) dazu angeordnet ist, das Verfahren nach einem der vorhergehenden Ansprüche durch Ausführen der einen oder mehreren Anweisungen durchzuführen.

9. Computerlesbares Aufzeichnungsmedium, das ein Programm zum Ausführen eines Verfahrens nach einem der Ansprüche 1 bis 7 enthält, um ein akustisches Erkennungsergebnis unter Verwendung einer Rechenvorrichtung bereitzustellen.

## Revendications

1. Procédé de fourniture d'un résultat de reconnaissance acoustique avec une fiabilité améliorée par un ou plusieurs processeurs d'un dispositif informatique, le procédé comprenant :
l'acquisition de données acoustiques représentant une forme d'onde de domaine temporel d'un son (S1000) ;
la génération d'une pluralité d'éléments de sous-données acoustiques en divisant les données acoustiques (10) en unités de temps de taille prédéfinie (S200) ; et
la génération d'un résultat de reconnaissance acoustique correspondant à chaque élément de sous-donnée acoustique (11a à 18a) en entrant la pluralité d'éléments de sous-données acoustiques dans un modèle de reconnaissance acoustique,
dans lequel le modèle de reconnaissance acoustique comprend un premier modèle de reconnaissance (210) configuré pour fournir une pluralité de sorties correspondant chacune à la pluralité d'éléments de sous-données acoustiques en utilisant la pluralité d'éléments de sous-données acoustiques comme entrées, et un second modèle de reconnaissance (220) configuré pour fournir une sortie correspondant à des sous-données acoustiques de vérification combinées (20), en utilisant les sous-données acoustiques de vérification combinées (20) comme entrée,
dans lequel la génération des sous-données acoustiques de vérification combinées (20) comprend :
la sélection de sous-données acoustiques de vérification, qui doivent être vérifiées, sur la base d'un résultat de reconnaissance acoustique qui est délivré en sortie conformément à la pluralité d'éléments de sous-données acoustiques par le premier modèle de reconnaissance (S311) ;
l'identification de sous-données acoustiques supplémentaires générées dans une unité de temps adjacente à celle des sous-données acoustiques de vérification ; et
la combinaison des sous-données acoustiques de vérification (20) et des sous-données acoustiques supplémentaires ;
dans lequel la génération du résultat de reconnaissance acoustique comprend l'entrée des sous-données acoustiques de vérification combinées dans le second modèle de reconnaissance (220),
dans lequel le second modèle de reconnaissance (220) est mis en œuvre via une interface de programmation d'application (API) en nuage, et
dans lequel la sélection des sous-données acoustiques de vérification comprend :
la dérivation d'un score de similitude entre des éléments de reconnaissance liés aux sorties du premier modèle de reconnaissance (210), dans lequel les éléments de reconnaissance correspondent à des étiquettes d'événements sonores identifiées pour chaque élément de sous-données acoustiques, et dans lequel le score de similitude est calculé sur la base d'une évaluation de similitude entre les éléments de reconnaissance liés aux sorties du premier modèle de reconnaissance (210) ; et
la sélection de sous-données acoustiques de vérification sur la base du score de similitude calculé.

2. Procédé selon la revendication 1, dans lequel la sélection des sous-données acoustiques de vérification (20) comprend :
l'identification si un résultat de reconnaissance acoustique délivré en sortie par le premier modèle de reconnaissance (210) est compris dans des éléments de vérification prédéfinis, dans lequel les éléments de vérification prédéfinis sont des éléments prédéterminés stockés à l'avance qui sont définis sur la base de sons similaires qui sont difficiles à distinguer ; et
lorsque le résultat de reconnaissance acoustique est compris dans les éléments de vérification prédéfinis, la sélection de sous-données acoustiques à partir desquelles le résultat de reconnaissance acoustique est calculé en tant que sous-données acoustiques de vérification qui doivent être vérifiées.

3. Procédé selon la revendication 1, dans lequel le premier modèle de reconnaissance (210) calcule une valeur de probabilité spécifique à chaque élément de reconnaissance, représentant la probabilité que les sous-données acoustiques (11a à 18a) concernent l'élément de reconnaissance, et délivre en sortie, en tant que résultat de reconnaissance acoustique, l'élément de reconnaissance correspondant à un maximum des valeurs de probabilité calculées, et
la sélection des sous-données acoustiques de vérification (20) comprend, lorsque deux ou plus des valeurs de probabilité spécifiques à un élément de reconnaissance calculées par le premier modèle de reconnaissance (210) dépassent une valeur de référence de seuil prédéfinie, la sélection de sous-données acoustiques à partir desquelles le résultat de reconnaissance acoustique est calculé en tant que sous-données acoustiques de vérification qui doivent être vérifiées.

4. Procédé selon la revendication 1, comprenant en outre une correction de post-traitement sur les résultats de reconnaissance acoustique, la correction de post-traitement comprenant :
la génération d'informations de corrélation de résultat entre une pluralité de résultats de reconnaissance acoustique, les informations de corrélation de résultat indiquant si la pluralité de résultats de reconnaissance acoustique sont liés les uns aux autres ; et
la correction d'au moins un des résultats de reconnaissance acoustique sur la base des informations de corrélation.

5. Procédé selon la revendication 4, dans lequel la correction de l'au moins un des résultats de reconnaissance acoustique comprend, lorsqu'un premier résultat de reconnaissance acoustique et un deuxième résultat de reconnaissance acoustique sont générés dans un temps prédéfini, la correction d'au moins l'un du premier résultat de reconnaissance acoustique et du deuxième résultat de reconnaissance acoustique sur la base du fait que le premier résultat de reconnaissance acoustique et le deuxième résultat de reconnaissance acoustique ne soient pas liés.

6. Procédé selon la revendication 1, comprenant en outre la génération d'informations d'humeur correspondant au résultat de reconnaissance acoustique à l'aide d'un module d'identification d'humeur,
dans lequel les informations d'humeur comprennent des informations d'estimation de lieu et des informations d'estimation d'émotion en tant qu'informations d'estimation d'une atmosphère liée à un espace à partir duquel les données acoustiques sont acquises,
dans lequel la génération du résultat de reconnaissance acoustique comprend :
la génération d'informations de corrélation d'humeur entre un premier résultat de reconnaissance acoustique correspondant à des premières sous-données acoustiques et des informations d'humeur correspondant aux premières sous-données acoustiques, les informations de corrélation d'humeur comprenant une valeur numérique indiquant si le premier résultat de reconnaissance acoustique et les informations d'humeur des premières sous-données acoustiques sont liés les uns aux autres ;
la non-correction du premier résultat de reconnaissance acoustique lorsque les informations de corrélation sont une valeur de référence prédéfinie ou plus ; et
la correction du premier résultat de reconnaissance acoustique lorsque les informations de corrélation sont inférieures à la valeur de référence prédéfinie, et
le modèle d'identification d'humeur est un modèle de réseau neuronal qui est entraîné à reconnaître le résultat de reconnaissance acoustique et à émettre en sortie les informations d'humeur correspondant aux environnements de chaque élément de sous-données acoustiques.

7. Procédé selon la revendication 6, dans lequel la correction du premier résultat de reconnaissance acoustique comprend :
l'identification d'une pluralité de mots-clés qui correspondent à des sons qui sont similaires au premier résultat de reconnaissance acoustique ;
la génération d'une pluralité d'éléments de sous-informations de corrélation entre une pluralité de mots clés et les informations d'humeur, dans lequel les éléments de sous-informations de corrélation comprennent une valeur numérique indiquant un degré de corrélation entre chaque mot clé et les informations d'humeur des premières sous-données acoustiques ; et
l'identification d'une sous-information de corrélation maximale correspondant à un maximum de la pluralité d'éléments de sous-information de corrélation et la correction du premier résultat de reconnaissance acoustique sur la base d'un mot-clé correspondant à la sous-information de corrélation maximale.

8. Dispositif comprenant :
une mémoire (120) configurée pour stocker une ou plusieurs instructions ; et
un processeur (110) configuré pour exécuter l'une ou plusieurs instructions stockées dans la mémoire,
dans lequel le processeur (110) est conçu pour exécuter le procédé selon l'une quelconque des revendications précédentes en exécutant l'une ou plusieurs instructions.

9. Support d'enregistrement lisible par ordinateur contenant un programme permettant d'exécuter un procédé selon l'une quelconque des revendications 1 à 7 afin de fournir un résultat de reconnaissance acoustique à l'aide d'un dispositif informatique.
